(19) Europäisches Patentamt
European Patent Office
Office européen des brevets

(11) EP 4 693 514 A1

(12) **EUROPEAN PATENT APPLICATION**
published in accordance with Art. 153(4) EPC

(43) Date of publication:
**11.02.2026 Bulletin 2026/07**

(21) Application number: **24781169.8**

(22) Date of filing: **25.03.2024**

(51) International Patent Classification (IPC):
***H01M 4/62*** *(2006.01)* ***H01M 4/134*** *(2010.01)*
***H01M 10/052*** *(2010.01)*

(52) Cooperative Patent Classification (CPC):
**H01M 4/134; H01M 4/62; H01M 10/052**

(86) International application number:
**PCT/KR2024/003735**

(87) International publication number:
**WO 2024/205178 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039415**
**03.07.2023 KR 20230085977**

(71) Applicant: **SAMSUNG SDI CO., LTD.**
**Yongin-si, Gyeonggi-do 17084 (KR)**

(72) Inventors:
- **WOO, Hyun Sik**
  **Yongin-Si Gyeonggi-do 17084 (KR)**
- **LEE, Kang Hee**
  **Yongin-Si Gyeonggi-do 17084 (KR)**
- **MOON, Jong Seok**
  **Yongin-Si Gyeonggi-do 17084 (KR)**
- **BAE, Woo Jin**
  **Yongin-Si Gyeonggi-do 17084 (KR)**
- **KIM, Hee Min**
  **Yongin-Si Gyeonggi-do 17084 (KR)**
- **PARK, Jong Seok**
  **Yongin-Si Gyeonggi-do 17084 (KR)**
- **JUNG, Kyung Hwa**
  **Yongin-Si Gyeonggi-do 17084 (KR)**
- **PARK, Jin Hwan**
  **Yongin-Si Gyeonggi-do 17084 (KR)**
- **PARK, Kyu Sung**
  **Yongin-Si Gyeonggi-do 17084 (KR)**

(74) Representative: **Michalski Hüttermann & Partner Patentanwälte mbB**
**Kaistraße 16A**
**40221 Düsseldorf (DE)**

(54) **BINDER, ANODE COMPRISING SAME, AND LITHIUM BATTERY**

(57) Disclosed are a binder for an electrodeposition induction layer of a lithium battery, an node including an electrodeposition induction layer that include the binder, and a lithium battery including the anode, the binder including: a repeating unit (A) derived from an ethylene-based unsaturated monomer including a carboxyl group; a repeating unit (B) derived from an ethylene-based unsaturated monomer including a nitrile group; and a repeating unit (C) derived from an ethylene-based unsaturated monomer including a polyalkyleneglycol group.

FIG. 1

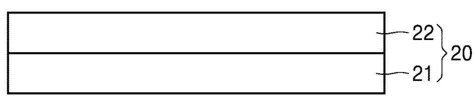


EP 4 693 514 A1

## Description

### Technical Field

Disclosed are a binder, an electrode including the same, and a lithium battery.

### Background Art

In an anode-less lithium battery not including an anode or anode active material including a lithium metal, a protective film is applied to prevent dendrite formation and to ensure uniform ion-flux during dendrite formation.
As a protective film, a polymer protective film, an inorganic protective film, or an organic/inorganic composite protective film may be used, and most protective films were used to have a thickness of 10 μm or more to ensure sufficient ion conductivity. However, as the protective film became thicker, a lithium battery including the same had a problem of lower current density.
To solve such a problem, a hybrid binder of polyimide and polyvinyl alcohol was applied, but it was not easy to form a stable SEI during initial electrodeposition.
Therefore, in an anode-less lithium battery not including an anode or anode active material including a lithium metal, a protective film and a binder for forming the protective film are required, the protective film providing high initial efficiency and lifespan characteristics and improved electrode stability and capable of suppressing changes in the volume of an electrode.

### Disclosure of Invention

### Technical Goal of the Invention

One aspect is to provide a binder for forming an electrode position induction layer, the binder having reduced internal resistance, enhanced lifespan characteristics, and enhanced electrode stability and capable of suppressing volume change of an electrode .
Another aspect is to provide an anode including a protective film that includes the binder.
Another aspect is to provide a lithium battery including the anode.

### Means for Achieving Technical Goal

According to an embodiment, there is provided a binder for an electrodeposition induction layer of a lithium battery, the binder including:

a repeating unit (A) derived from an ethylene-based unsaturated monomer including a carboxyl group;
a repeating unit (B) derived from an ethylene-based unsaturated monomer including a nitrile group; and
a repeating unit (C) derived from an ethylene-based unsaturated monomer including a polyalkyleneglycol group.

According to another embodiment, there is provided an anode including:
an anode current collector; and an electrodeposition induction layer arranged on the anode current collector and including the binder.
According to another embodiment, there is provided a lithium battery including:
a cathode; the anode; and an electrolyte arranged between the cathode and the anode.

### Advantageous Effects of Invention

According to one aspect, a binder includes a repeating unit (A) derived from an ethylene-based unsaturated monomer including a carboxyl group, a repeating unit (B) derived from an ethylene-based unsaturated monomer including a nitrile group, and a repeating unit (C) derived from an ethylene-based unsaturated monomer including a polyalkyleneglycol group, and use of the binding leads to a reduction in the internal resistance of a lithium battery and improvement in the lifespan characteristics and electrode stability. In addition, the volume change of a lithium battery may be suppressed.

### Brief Description of the Drawings

FIG. 1 is a cross-sectional view of an anode according to an embodiment.
FIG. 2 is a cross-sectional view of an anode according to another embodiment.
FIG. 3 is a schematic view of a lithium battery according to an embodiment.
FIG. 4 is a schematic view of a lithium battery according to an embodiment.
FIG. 5 is a schematic view of a lithium battery according to an embodiment.
FIG. 6 is a cross-sectional view of a lithium metal battery including a solid electrolyte layer, according to another embodiment.
FIG. 7 is a cross-sectional view of a lithium metal battery including a solid electrolyte layer, according to another embodiment.
FIG. 8A is a scanning electron microscope (SEM) image showing an electrodeposited lithium layer formed on an electrodeposition induction layer after charging a pouch cell of Example 1 at 0.1 $mAh/cm^2$.
FIG. 8B is an SEM image showing an electrodeposited lithium layer formed on an electrodeposition induction layer after charging a pouch cell of Example 1 to state of charge (SOC) 100 %.
FIG. 8C is an SEM image showing cross sections of an electrodeposited lithium layer and an electrodeposition induction layer after charging a pouch cell of Example 1 to SOC 100 %.
FIG. 9A is an SEM image of an anode when an electrodeposited lithium layer begins to form on an electrodeposition induction layer according to Comparative Example 5.
FIG. 9B is an SEM image showing an electrodeposited lithium layer formed on an electrodeposition induction layer after charging a pouch cell of Comparative Example 3 to SOC 100 %.
FIG. 9C is an SEM image showing cross sections of an electrodeposited lithium layer and an electrodeposition induction layer after charging a pouch cell of Comparative Example 3 to SOC 100 %.

## Best Mode for Carrying out the Invention

## Mode for the Invention

In an anode-free lithium metal battery, which is a lithium battery lacking an anode active material layer, a lithium-containing electrodeposited lithium layer undergoes precipitation and dissolution between an anode current collector and an electrolyte layer during charging and discharging. As the anode-free lithium metal battery is repeatedly charged and discharged, the electrodeposited lithium layer may include impurities remaining in the electrode and decomposition products of an electrolyte. In this regard, due to the presence of impurities, the surface of the electrodeposited lithium layer become rough and hard. Then, lithium dendrites are deposited on the electrodeposited lithium layer having such a rough surface. Such lithium dendrites continuously grow during charging and discharging, causing short circuits between an anode and a cathode.

An anode according to one aspect includes an electrodeposition induction layer including the new binder, such that lithium may be deposited uniformly and formation of lithium dendrites on the anode may be suppressed. A lithium battery including the anode may suppress occurrence of short circuit, thereby improving cycle characteristics.

The present inventive concept described hereinbelow may have various modifications and various embodiments, and in this regard, example embodiments will be illustrated in the drawings and more fully described. The present inventive concept may, however, should not be construed as limited to the example embodiments set forth herein, and rather, should be understood as covering all modifications, equivalents, or alternatives falling within the scope of the present inventive concept.

The terms as used herein are for the purpose of describing particular embodiments only, and are not intended to be limiting the present inventive concept. An expression used in the singular encompasses the expression of the plural, unless it has a clearly different meaning in the context. It will be further understood that the terms "comprises" and/or "comprising," or "includes" and/or "including" when used in this specification, may specify the presence of stated features, regions, integers, steps, operations, elements, and/or components, but may not preclude the presence or addition of one or more other features, regions, integers, steps, operations, elements, components, and/or groups thereof. As used herein, "/" may be interpreted as "and" or as "or," depending on the context.

In the drawings, thicknesses may be magnified or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element. In the present specification and drawings, components having substantially the same functional features are referred to the same reference numerals, and thus repeated descriptions will be omitted.

In the present disclosure, the term "particle diameter" of particles refers to an average diameter of particles when

the particles are spherical, and refers to an average major axis length of particles when the particles are non-spherical. The particle diameter of the particles may be measured by using a particle size analyzer (PSA). The "particle diameter' of the particles refers to, for example, an average particle diameter. The average particle diameter may be, for example, a median particle diameter D50. The median particle diameter D50 is a particle size corresponding to a 50 % cumulative volume calculated from particles having a small particle size in a particle size distribution measured by, for example, a laser diffraction method.

In the present specification, the term "substituted with a halogen" may refer that any hydrogen included in a polymer is substituted with a halogen or a C1-C5 alkyl group substituted with a halogen.

In the present specification, the "halogen" refers to fluorine, chlorine, bromine, or iodine.

In the present disclosure, the term "metal" may include both a metal and a metalloid, such as silicon and germanium, in an elemental state or an ionic state.

In the present disclosure, the term "alloy" may refer to a mixture of two or more metals.

In the present disclosure, the term "cathode active material" may refer to a cathode material capable of undergoing lithiation and delithiation.

In the present disclosure, the term "anode electrode active material" may refer to an anode material capable of undergoing lithiation and delithiation.

In the present disclosure, the terms "lithiation" and "lithiate" may refer to a process of adding lithium to a cathode active material or an anode active material.

In the present disclosure, the terms "delithiation" and "delithiate" may refer to a process of removing lithium from a cathode active material or an anode active material.

In the present disclosure, the terms "charging" and "charge" may refer to a process of providing electrochemical energy to a battery.

In the present disclosure, the terms "discharging" and "discharge" may refer to a process of eliminating electrochemical energy from a battery.

In the present disclosure, the terms "positive electrode" and "cathode" may refer to an electrode in which electrochemical reduction and lithiation occur during a discharge process.

In the present disclosure, the terms "negative electrode" and "anode" may refer to an electrode in which electrochemical oxidation and delithiation occur during a charge process.

Hereinafter, according to exemplary embodiments, a binder, an anode including the same, and a lithium battery will be further described in detail.

[Binder]

A binder for an electrodeposition induction layer of a lithium battery according to an embodiment may include: a repeating unit (A) derived from an ethylene-based unsaturated monomer including a carboxyl group; a repeating unit (B) derived from an ethylene-based unsaturated monomer including a nitrile group; and a repeating unit (C) derived from an ethylene-based unsaturated monomer including a polyalkyleneglycol group.

For example, when an electrodeposition induction layer includes the binder including: the repeating unit (A) derived from an ethylene-based unsaturated monomer including a carboxyl group; the repeating unit (B) derived from an ethylene-based unsaturated monomer including a nitrile group; and the repeating unit (C) derived from an ethylene-based unsaturated monomer including a polyalkyleneglycol group, the strength, flexibility, and lithium ion conductivity of the electrodeposition induction layer may be improved. Accordingly, a lithium battery including the electrode position induction layer that includes the binder may have reduced volume change and reduced internal resistance, resulting in improved lifespan characteristics and electrode stability.

For example, the ethylene-based unsaturated monomer including a carboxyl group may improve the strength of the binder. The electrodeposition induction layer including the binder with improved strength has reduced expansion, and thus an anode including the electrodeposition induction layer may have improved electrode stability. Accordingly, a lithium battery including the binder may have improved lifespan characteristics.

In an embodiment, the ethylene-based unsaturated monomer including a carboxyl group may be represented by Formula 1:

Formula 1

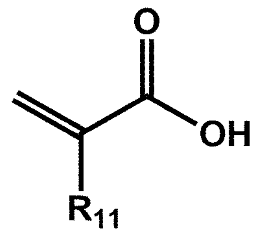

wherein, in Formula 1,

$R_{11}$ may be: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

In an embodiment, in Formula 1, $R_{11}$ may be hydrogen or a C1-C10 alkyl group unsubstituted or substituted with a halogen. For example, in Formula 1, $R_{11}$ may be hydrogen, a methyl group, or an ethyl group.

In an embodiment, the ethylene-based unsaturated monomer including a carboxyl group may be an acrylic acid or a methacrylic acid.

In an embodiment, the ethylene-based unsaturated monomer including a carboxyl group may further include an ethylene-based unsaturated monomer including a carboxyl group in which hydrogen of the carboxyl group is substituted with lithium. For example, when the ethylene-based unsaturated monomer including a carboxyl group further includes the ethylene-based unsaturated monomer including a carboxyl group in which hydrogen of the carboxyl group is substituted with lithium, the lithium conductivity of the binder may be improved. Accordingly, the internal resistance of the electrodeposition induction layer including the binder may be reduced, thereby reducing the internal resistance of a lithium battery including the electrodeposition induction layer and improving charging and discharging efficiency.

In an embodiment, the ethylene-based unsaturated monomer including a carboxyl group in which hydrogen of the carboxyl group is substituted with lithium may be represented by Formula 1-1:

Formula 1-1

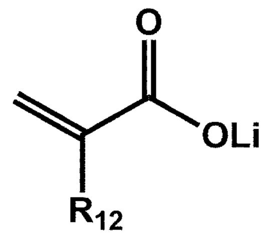

wherein, in Formula 1-1,

$R_{12}$ may be: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

In an embodiment, in Formula 1-1, $R_{12}$ may be: hydrogen; or a C1-C10 alkyl group unsubstituted or substituted with a halogen. For example, in Formula 1-1, $R_{12}$ may be hydrogen, a methyl group, or an ethyl group.

In an embodiment, an amount of the ethylene-based unsaturated monomer including a carboxyl group in which hydrogen of the carboxyl group is substituted with lithium included in the ethylene-based unsaturated monomer including a carboxyl group may be 50 to 90 mol%.

For example, the repeating unit (B) derived from the ethylene-based unsaturated monomer including a nitrile group may improve the flexibility of the binder. For example, if the flexibility of the binder is improved by including the repeating unit (B) derived from the ethylene-based unsaturated monomer including a nitrile group, the flexibility of the electrodeposition induction layer including the binder is also improved. In this regard, the binder may be used to prevent cracks and damage that may occur in the electrodeposition induction layer during the manufacturing process of a lithium battery.

In an embodiment, the ethylene-based unsaturated monomer including a nitrile group may be represented by Formula 2:

Formula 2

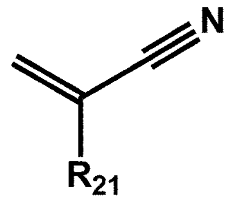

wherein, in Formula 2,
$R_{21}$ may be: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

In an embodiment, in Formula 2, $R_{21}$ may be: hydrogen; or a C1-C10 alkyl group unsubstituted or substituted with a halogen. For example, in Formula 2, $R_{21}$ may be hydrogen, a methyl group, or an ethyl group.

In an embodiment, the ethylene-based unsaturated monomer including a nitrile group may be acrylonitrile or methacrylonitrile.

For example, the ethylene-based unsaturated monomer including a polyalkyleneglycol group may improve the lithium conductivity of the binder. For example, due to the polyalkyleneglycol group included in the ethylene-based unsaturated monomer, the lithium ion conductivity may be improved. Accordingly, the internal resistance of the electrodeposition induction layer including the binder may be reduced.

In an embodiment, the ethylene-based unsaturated monomer including a polyalkyleneglycol group may be represented by Formula 3:

Formula 3

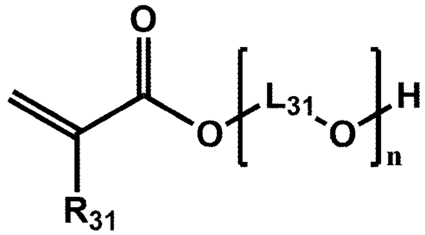

wherein, in Formula 3,
$R_3$ may be: hydrogen; a C1-C10 alkyl group unsubstituted or substituted with a halogen; a C6-C20 aryl group unsubstituted or substituted with a halogen; or a C2-C20 heteroaryl group unsubstituted or substituted with a halogen, $L_{31}$ may be a C1-C10 alkylene group unsubstituted or substituted with a halogen, and n1 may be an integer of 1 or more.

In an embodiment, in Formula 3, $R_{31}$ may be: hydrogen; or a C1-C10 alkyl group unsubstituted or substituted with a halogen. For example, in Formula 3, $R_{31}$ may be hydrogen, a methyl group, or an ethyl group.

In an embodiment, in Formula 3, $L_{31}$ may be a methylene group, an ethylene group, a propylene group, or a butylene group.

In an embodiment, in Formula 3, n may be an integer of 2 or more.

In an embodiment, the ethylene-based unsaturated monomer including a polyalkyleneglycol group may be poly(ethylene glycol) (meth)acrylate).

In an embodiment, a weight average molecular weight Mw of the ethylene-based unsaturated monomer including a polyalkyleneglycol group may be 900 g/mol or less. For example, the weight average molecular weight Mw of the ethylene-based unsaturated monomer including a polyalkyleneglycol group may be 300 to 900 g/mol or 300 to 600 g/mol. For example, when the weight average molecular weight Mw of the ethylene-based unsaturated monomer including a polyalkyleneglycol group is within the ranges above, the binder may have excellent inductivity, which may further improve the conductivity of lithium ions. Accordingly, the internal resistance of the electrodeposition induction layer including the binder may be reduced.

In an embodiment, based on the total weight of the binder, an amount of the repeating unit (A) may be 25 to 60 wt%, an amount of the repeating unit (B) may be 5 to 50 wt%, and an amount of the repeating unit (C) may be 5 to 50 wt%.

In an embodiment, based on the total weight of the binder, an amount of the repeating unit (A) may be 25 to 50 wt%, 25 to 45 wt%, 30 to 50 wt%, or 30 to 45 wt%.

In an embodiment, based on the total weight of the binder, an amount of the repeating unit (B) may be 5 to 50 wt%, 15 to 50 wt%, 25 to 50 wt%, or 25 to 40 wt%.

In an embodiment, based on the total weight of the binder, an amount of the repeating unit (C) may be 5 to 50 wt%, 15 to 50 wt%, 30 to 50 wt%, or 30 to 45 wt%.

In an embodiment, the binder may be a random copolymer or a block copolymer. For example, the binder may be a random copolymer.

A weight average molecular weight Mw of the binder may be 10,000 to 2,000,000 g/mol. For example, the weight average molecular weight Mw of the binder may be 50,000 to 1,000,000 g/mol. For example, the weight average molecular weight Mw of the binder may be 100,000 to 1,000,000 g/mol.

The binder may be, for example, used in an electrochemical battery. The binder may be, for example, used in an electrodeposition induction layer included in an electrochemical battery. The electrochemical battery may be a lithium metal battery. For example, the lithium metal battery may be: a lithium metal battery including a lithium metal battery that includes an anode; or an anode-free lithium metal battery.

An anode according to another embodiment may include: an anode current collector; and an electrodeposition induction layer arranged on the anode current collector and including the binder.

Hereinafter, the anode including an electrodeposition induction layer including the binder according to embodiments and a lithium battery including the anode will be described in more detail.

[Anode]

An anode according to an embodiment may include: an anode current collector; and an electrodeposition induction layer arranged on one side of the anode current collector, wherein the electrodeposition induction layer includes the binder. When the anode includes the electrodeposition induction layer including the binder, a lithium battery including the anode may accordingly suppress volume change, reduce internal resistance, and improve lifespan characteristics and electrode stability.

Referring to FIG. 1, an anode 20 may include: an anode current collector 21; and an electrodeposition induction layer 22 arranged on the anode current collector 21 and including the binder.

Referring to FIG. 2, an anode 20 may include: an anode current collector 21; an electrode position induction layer 22 arranged on the anode current collector 21 and including the binder; and an electrodeposited lithium layer 23 arranged on the electrode position induction layer 22.

[Anode: Anode current collector]

Referring to FIGS. 1 and 2, the anode 20 includes the anode current collector 21.

A material constituting the anode current collector 21 may be a material that does not react with lithium, i.e., any material that does not form an alloy or a compound with lithium and that has conductivity. The anode current collector 21 may be, for example, a metal or an alloy. The anode current collector 21 may be, for example, indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The anode current collector 21 may be, for example, a first metal substrate. The first metal substrate may include a first metal as a main component, or consists of a first metal. An amount of the first metal included in the first metal substrate may be, for example, 90 wt% or more, 95 wt% or more, 99 wt% or more, or 99.9 wt% or more, based on the total weight of the first metal. The first metal substrate may be, for example, composed of a material that does not react with lithium, i.e., a material that does not form an alloy and/or compound with lithium.

The first metal may be, for example, Cu, Ni, SUS, Fe, Co, and the like, but is not necessarily limited thereto. Any material available as a current collector in the art may be used. The first metal substrate may be, for example, composed of one type of the aforementioned metals, or composed of an alloy of two or more metals. The first metal substrate may be, for example, in a sheet form or a foil form. A thickness of the anode current collector 21 may be, for example, 5 μm to 50 μm, 10 μm to 50 μm, 10 μm to 40 μm, or 10 μm to 30 μm, but is not necessarily limited thereto. The thickness may be selected according to the characteristics of the required lithium battery.

The anode current collector 21 may further include, on the first metal substrate, a coating layer (not shown) including a second metal.

The anode current collector 21 may include, for example: the first metal substrate; and a coating layer arranged on the first metal substrate and including a second metal. The second metal may have higher Mohs hardness than the first metal. That is, the coating layer including the second metal is harder than the first metal substrate, and thus the deterioration of the first metal substrate may be prevented. A material constituting the first metal substrate may have a Mohs hardness of, for example, 5.5 or less. The Mohs hardness of the first metal may be, for example, 5.5 or less, 5.0 or less, 4.5 or less, 4.0 or less, 3.5 or less, or 3.0 or less. The Mohs hardness of the first metal may be, for example, 2.0 to 6.0. The coating layer may include the second metal. The coating layer may include the second metal as a main component, or consists of the second metal. An amount of the second metal included in the coating layer may be, for example, 90 wt% or

more, 95 wt% or more, 99 wt% or more, or 99.9 wt% or more, based on the total weight of the coating layer. The coating layer may be, for example, composed of a material that does not react with lithium, i.e., a material that does not form an alloy and/or compound with lithium. A material constituting the coating layer may have a Mohs hardness of, for example, 6.0 or more. For example, the Mohs hardness of the second metal may be 6.0 or more, 6.5 or less, 7.0 or more, 7.5 or more, 8.0 or more, 8.5 or more, or 9.0 or more. The Mohs hardness of the second metal may be, for example, 6.0 to 12. When the Mohs hardness of the second metal is excessively low, suppression of the deterioration of the anode current collector 21 may be difficult. When Mohs hardness of the second metal is excessively high, processing may be difficult. The second metal may be, for example, one or more selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may be, for example, composed of one type of the aforementioned metals, or composed of an alloy of two or more metals. A difference between the Mohs hardness of the first metal included in the first metal substrate and the Mohs hardness of the second metal included in the coating layer may be, for example, 2 or more, 2.5 or more, 3 or more, 3.5 or more, or 4 or more. By the difference in the Mohs hardness between the first metal and the second metal, the deterioration of the anode current collector 21 may be more effectively suppressed. The coating layer may be a single layer structure, or a multi-layer structure consisting of two or more layers. The coating layer may have, for example, a two-layer structure including a first coating layer and a second coating layer. The coating layer may have, for example, a three-layer structure including a first coating layer, a second coating layer, and a third coating layer. A thickness of the coating layer may be, for example, 10 nm to 1 μm, 50 nm to 500 nm, 50 nm to 200 nm, or 50 m to 150 nm. If the coating layer is too thin, it may be difficult to suppress uneven growth of lithium-containing metal layers. As the thickness of the coating layer increases, the cycle characteristics of a lithium battery may improve, but if the coating layer is too thick, the energy density of a lithium battery may decrease and the coating layers may not be easily formed. The coating layer may be, for example, arranged on the first metal substrate by a vacuum deposition method, a sputtering method, a plating method, or the like, but the methods are not necessarily limited thereto. Any method capable of forming a coating layer in the art may be used.

For example, the anode current collector 21 may have a reduced thickness compared to an anode current collector included in an anode of the art. Accordingly, the anode disclosed herein includes, for example, a thin-film current collector, which makes it different from an electrode of the related art which includes a thick-film current collector. If an electrode according to an embodiment includes a thin-film current collector with a reduced thickness, a thickness of the electrodeposited lithium layer in the anode including the thin-film current collector may relatively increase. Consequently, a lithium battery employing such an electrode may have increased energy density. A thickness of the anode current collector 21 may have, for example, less than 15 μm, 14.5 μm or less, or 14 μm or less. The thickness of the anode current collector 21 may be, for example, 0.1 um to less than 15 um, 1 um to 14.5 um, 2 um to 14 um, 3 um to 14 um, 5 um to 14 um, or 10 um to 14 um.

The anode current collector 21 may have, for example, a shape selected from a sheet, a foil, a film, a plate, a porous body, a mesoporous body, a through-hole containing body, a polygonal ring body, a meshed body, a foaming body, and a non-woven body, but is not necessarily limited thereto. Any shape available in the art may be used.

The anode current collector 21 may include, for example, a base film and a metal substrate layer arranged on one side or both sides of the base film. The anode current collector 21 may include a substrate, and the substrate may have, for example, a structure including a base film and a metal substrate layer arranged on one side or both sides of the base film. An interlayer may be additionally arranged on the metal substrate layer.

For example, the base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. If the base film includes a thermoplastic polymer, the base film may be melted upon the occurrence of a short circuit, and thus a rapid increase in current may be suppressed. The base film may be, for example, an insulator. The metal substrate layer may include, for example, Cu, SUS, Ti, Fe, Co, Ni, or an alloy thereof. The metal substrate layer may act as an electrochemical fuse, and thus may be cut in the event of an overcurrent to perform a short circuit prevention function. By adjusting the thickness of the metal substrate layer, a limit current and a maximum current may be adjusted. The metal substrate layer may be plated or deposited on the base film. If a thickness of the metal substrate layer decreases, the limit current and/or the maximum current of the anode current collector 21 may decrease, and thus the stability of a lithium metal battery may be improved. A lead tab may be added on the metal substrate layer for the connection with the outside. The lead tab may be welded to the metal substrate layer or a laminate of metal substrate layer/base film by ultrasonic welding, laser welding, spot welding, or the like. The metal substrate layer may be electrically connected to the lead tab while the base film and/or the metal substrate layer melts during welding. A metal chip may be added between the metal substrate layer and the lead tab for stronger welding therebetween. The metal chip may be a thin piece of the same material as the metal in the metal substrate layer. The metal chip may be, for example, a metal foil or a metal mesh. The metal chip may be, for example, an Al foil, a Cu foil, or an SUS foil. By welding the lead tab after disposing the metal chip on the metal substrate layer, the lead tab may be welded to a laminate of metal chip/metal substrate layer or a laminate of metal chip/metal substrate layer/base film. During the welding, the metal layer or the laminate of metal substrate layer/metal chip may melt so that the metal substrate layer

and/or the laminate of metal substrate layer/metal chip may be electrically connected to the lead tab. The metal chip and/or the lead tab may be added to a portion on the metal substrate layer. A thickness of the base film may be, for example, 1 to 50 μm, 1.5 to 50 μm, 1.5 to 40 μm, or 1 to 30 μm. When the thickness of the base film is within the ranges above, the weight of an anode assembly may be reduced more effectively. A melting point of the base film may be, for example, 100 to 300 °C, 100 to 250 °C, or 100 to 200 °C. When the melting point of the base film is within the ranges above, the base film may be melted and easily connected to the lead tab in the process of welding the lead tab. To improve the adhesion between the base film and the metal substrate layer, a surface treatment such as a corona treatment may be performed on the base film. A thickness of the metal substrate layer may be, for example, 0.01 to 3 μm, 0.1 to 3 μm, 0.1 to 2 μm, or 0.1 to μm. When the thickness of the metal substrate layer is within the ranges above, the stability of an anode assembly may be secured while maintaining the conductivity. A thickness of the metal chip may be, for example, 2 to 10 μm, 2 to 7 μm, or 4 to 6 μm. When the thickness of the metal chip is within the ranges above, the connection between the metal layer and the lead tab may be performed more easily. When the anode current collector 21 has the aforementioned structure, the weight of an electrode may be reduced, thereby improving the energy density.

[Anode: Electrodeposition induction layer]

Referring to FIGS. 1 and 2, an anode 20 includes: an anode current collector 21; and an electrodeposition induction layer 22 arranged on the anode current collector 21. The electrodeposition induction layer 22 may include the aforementioned binder. For example, when the electrodeposition induction layer 22 includes the aforementioned binder, the lithium ion conductivity and strength of the electrodeposition induction layer 22 are improved by including the binder, and thus a lithium battery including the electrodeposition induction layer 22 may have reduced volume change and internal resistance, as well as improved electrode stability and lifespan characteristics.

In an embodiment, a thickness of the electrodeposition induction layer 22 may be 1 to 10 μm. The thickness of the electrode position induction layer 22 may be, for example, 1 to 8 μm, 1 to 6 μm, 1 to 5 μm, 1.5 to 10 μm, 2 to 10 μm, or 2 to 5 μm. When the thickness of the electrodeposition induction layer 22 is within the ranges above, the internal resistance of the anode may be effectively reduced while effectively preventing the formation and/or growth of lithium dendrites. In this regard, the cycle characteristics of a lithium battery including the electrodeposition induction layer 22 may be further improved. When the thickness of the electrodeposition induction layer 22 increases excessively, the internal resistance of a lithium metal battery may increase. When the thickness of the electrodeposition induction layer 22 is excessively reduced, the electrodeposition layer may exhibit little effect on electrodeposition induction.

In an embodiment, an amount of the binder may be, for example, 3 to 20 wt%, 3 to 15 wt%, 3 to 10 wt%, 3 to 7 wt%, or 4 to 7 wt%, based on the total weight of the electrodeposition induction layer 22. When the electrodeposition induction layer 22 includes the binder within the ranges above, the cycle characteristics of a lithium battery including the electrode position induction layer 22 may be further improved. When the amount of the binder in the electrodeposition induction layer 22 increases excessively, the aggregation of the binder and lithium ionic conductivity in the electrodeposition induction layer 22 may degrade. When the amount of the binder in the electrodeposition induction layer 22 is excessively reduced, a problem of the electrode position induction layer being separated from the anode current collector may occur.

In an embodiment, the electrodeposition induction layer 22 may be prepared by curing the composition for forming an electrodeposition induction layer including a binder. The composition for forming an electrodeposition induction layer may include the aforementioned binder. The electrode position induction layer 22 may be, for example, formed by applying the composition for forming an electrodeposition induction layer onto the anode current collector 21, followed by curing at a temperature of 100 °C or more.

The electrode position induction layer 22 may be, for example, formed by applying the composition for forming an electrode position induction layer onto the anode current collector 21, followed by curing at a temperature of 100 °C or more for 1 to 10 hours. The electrode position induction layer 22 may be, for example, formed by applying the composition for forming an electrodeposition induction layer onto the anode current collector 21, followed by curing at a temperature of 160 °C or more for 1 to 10 hours.

In an embodiment, the electrode position induction layer 22 may further include a conductive material.

The conductive material may include carbon black, acetylene black, denka black, ketjen black, carbon nanotubes, carbon nanofibers, carbon nanobelts, graphene, graphene oxide, fullerene, activated carbon, carbon fibers, or a combination thereof.

In an embodiment, the electrode position induction layer 22 may further include a binder other than the aforementioned binder. When the electrodeposition induction layer 22 includes a binder other than the aforementioned binder, the mechanical strength of the electrodeposition induction layer 22 may be improve while maintaining a certain shape of the electrodeposition induction layer 22.

The binder other than the aforementioned binder may be, for example, a nonconductive binder or a conductive binder. The conductive binder may be, for example, an ion conductive binder, an electronic conductive binder, or a combination thereof.

Examples of the binder other than the aforementioned binder are polystyrene sulfonate (PSS), polyvinylidene fluoride-hexafluoropropylene (PVDF-HFP) copolymer, polyvinyl fluoride (PVF), polyvinylidene fluoride (PVDF), poly(meta)acrylic acid, poly(meta)acrylate, poly(methylmethacrylate) (PMMA), polyethylene oxide (PEO), polyethylene glycol(PEG), polyacrylonitrile (PAN), acrylonitrile-styrene-butadiene copolymer, polytetrafluoroethylene (PTFE), polyethylene dioxythiophene (PEDOT), polypyrrole (PPY), polyaniline, polyacetylene, polytetrafluoroethylene (PTFE), styrene-butadiene rubber (SBR), polyimide (PI), polyamide imide (PAI), carboxylmethyl cellulose (CMC), polyvinyl chloride (PVC), denaturated polyphenylene oxide (PPO), polyethylene (PE), polypropylene (PP), and the like, but are not limited thereto. The ion conductive binder may include a polar functional group. Examples of the ion conductive binder including a polar functional group are Nafion, Aquivion, Flemion, Gore, Aciplex, Morgane ADP, sulfonated poly(ether ketone) (SPEEK), sulfonated poly(arylene ether ketone ketone sulfone) (SPAEKKS), sulfonated poly(aryl ether ketone) (SPAEK), poly [bis(benzimidazobenzisoquinolinones)], (SPBIBI), poly(styrene sulfonate) (PSS), lithium 9,10-diphenylanthracene-2-sulfonate ($DPASLi^+$), and the like. Examples of the electron conductive binder are polyacetylene, polythiophene, polypyrrole, poly(p-phenylene), poly(phenylenevinylene), poly(phenylenesulfide), polyaniline, and the like.

The binder other than the aforementioned binder may be, for example, an acrylic-based binder or a fluorine-based binder. Examples of the fluorine-based binder included in the electrodeposition induction layer 22 are PVDF, PTFE, polyvinylidene fluoride-hexafluoropropylene (PVDF-HFP), and the like. For example, the acrylic-based binder included in the electrodeposition induction layer 22 may be poly(meta)acrylic acid, poly(meta)acrylate, polymethyl(meta)acrylate, polyacrylonitrile, acrylonitrile-styrene-butadiene copolymer, and the like.

[Anode: Electrodeposited lithium layer]

Referring to FIG. 2, the anode 20 may include: the anode current collector 21; the electrodeposition induction layer 22 arranged on the anode current collector 21; and the electrodeposited lithium layer 23 arranged on the electrodeposition induction layer 22, wherein the electrodeposited lithium layer 23 may include a lithium metal or a lithium alloy.

After the anode is introduced together with a cathode and an electrolyte into a lithium battery, a lithium metal is plated on the electrodeposited lithium layer 22 by charging to thereby prepare the electrodeposited lithium layer. The electrodeposited lithium layer 23 may include, for example, a lithium metal or a lithium alloy.

For example, the lithium alloy may be an alloy of lithium with another metal alloyable with lithium, and may include, for example, a lithium-silver alloy, a lithium-zinc alloy, a lithium-magnesium alloy, a lithium-tin alloy, and the like.

In an embodiment, the electrodeposited lithium layer 23 may include a spherical lithium metal or a spherical lithium alloy. For example, when the electrodeposited lithium layer 23 is formed on the electrodeposition induction layer 22 including the aforementioned binder, the electrodeposition of lithium ions may be induced on the electrodeposition induction layer 22, and accordingly, a spherical lithium metal or lithium alloy may be electrodeposited on the electrode position induction layer 22. In this regard, the electrodeposited lithium layer 23 may include a spherical lithium metal or lithium alloy.

In an embodiment, an average particle diameter D50 of the spherical lithium metal or lithium alloy may be 0.1 to 15 μm, 0.1 to 12 μm, 0.1 to 10 μm, 1 to 15 μm, 2 to 15 μm, 3 to 15 μm, or 3 to 10 μm.

A thickness of the electrodeposited lithium layer 23 may be, for example, 50 μm or less, 40 μm or less, 35 μm or less, 30 μm or less, 1 μm to 50 μm, 1 μm to 40 μm, 5 μm to 40 μm, 1 μm to 35 μm, or 10 μm to 35 μm. For example, when the thickness of the electrodeposited lithium layer 23 is within the ranges above, the energy of a lithium battery may be further improved.

In an embodiment, a thickness of the electrodeposited lithium layer 23 at maximum charge may be 35 μm or less, 30 μmor less, 28 μm or less, 10 to 35 μm, 10 to 30 μm, or 10 to 28 μm.

[Anode: Anode interlayer]

Referring to FIGS. 1 and 2, the anode 20 may selectively further include an anode interlayer (not shown) between the anode current collector 21 and the electrodeposition induction layer 22. When the anode 20 additionally includes the anode interlayer, the formation and/or growth of lithium dendrites in the anode 20 may be more effectively suppressed. The anode interlayer may be omitted.

The anode interlayer may include, for example, an anode active material and a binder. The anode active material may be an anode material that may undergo lithiation and delithiation. The anode active material included in the anode interlayer may have, for example, a particle shape. An average particle diameter D50 of the anode active material in the form of particles may be, for example, 10 nm to 4 μm, 10 nm 1 μm, 10 nm to 500 nm, 10 nm to 100 nm, or 20 nm to 80 nm. When the average particle diameter D50 of the anode active material is within the ranges above, lithium may be more easily subjected to reversible plating and/or dissolution during charging and discharging. The average particle diameter D50 of the anode active material may be, for example, a median diameter D50 measured by using a laser particle size

distribution meter.

The anode active material included in the anode interlayer may be, for example, one or more selected from a carbon-based anode active material and a metallic or metalloid anode active material. The carbon-based anode active material may be, for example, amorphous carbon. Examples of the amorphous carbon are CB, AB, FB, KB, graphene, or the like, but are not necessarily limited thereto. Any material categorized as amorphous carbon in the art may be used. The amorphous carbon may be carbon that has no or very low crystallinity, and in this regard, may be distinguished from crystalline carbon or graphite-based carbon. The metallic or metalloid anode active material may include at least one of Au, Pt, Pd, Au, Pt, Pd, Si, Ag, Al, Bi, Sn, and Zn, but is not necessarily limited thereto. Any material available as the metallic or metalloid anode active material capable of forming an alloy or compound with lithium in the art may be used. For example, Ni does not form an alloy with lithium, and thus Ni is not regarded as a metallic anode active material in the present specification. The anode interlayer may include a single type of anode active material, or may include a mixture of a plurality of different anode active materials. The anode interlayer may include, for example, a mixture of amorphous carbon with at least one metal selected from Au, Pt, Pd, Si, Ag, Al, Bi, Sn, Zn. A mixing ratio of the mixture may be a weight ratio, and for example, may be 10:1 to 1:2, 10:1 to 1:1, 7:1 to 1:1, 5:1 to 1:1, or 4:1 to 2:1. The anode active material layer included in the anode interlayer may include, for example, a mixture of first particles consisting of amorphous carbon and second particles consisting of a metal or a metalloid. The metal may include, for example, Au, Pt, Pd, Si, Ag, Al, Bi, Sn, Zn, or the like. An amount of the second particles may be 8 to 60 wt%, 10 to 50 wt%, 15 to 40 wt%, or 20 to 30 wt%, based on the total weight of the mixture. When the amount of the second particles is within the ranges above, for example, the cycle characteristics of the lithium secondary battery may be further improved.

Examples of the binder included in the anode layer are a styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and the like, but are not limited thereto. Any material available as the binder in the art may be used. The binder may be used alone or in a combination of a plurality of different binders. When the anode interlayer does not include the binder, the anode interlayer may be easily delaminated from the anode current collector 21. An amount of the binder included in the anode interlayer may be, for example, 1 to 20 wt% based on the total weight of the anode interlayer.

A thickness of the anode interlayer may be, for example, 1 μm to 20 μm, 1 μm to 15 μm, or 2 μm to 10 μm, or 3 μm to 7 μm. The thickness of the anode interlayer may be, for example, 1 % to 50 %, 1 % to 30 %, 1 % to 10 %, or 1 % to 5 %, of the thickness of a cathode active material layer. If the thickness of the anode interlayer is excessively small, lithium dendrites formed between the anode interlayer and the anode current collector may cause the anode interlayer to collapse, making it difficult to improve the cycle characteristics of a lithium battery. If the thickness of the anode interlayer excessively increases, a lithium battery employing the anode 20 may have deterioration in the energy density, making it difficult to improve the cycle characteristics of the lithium battery. If the thickness of the anode interlayer decreases, for example, the charge capacity of the anode interlayer may also decrease. The charge capacity of the anode may be, for example, 0.1 % to 50 %, 1 % to 30 %, 1 % to 10 %, 1 % to 5 %, or 1 % to 2 %, based on the charge capacity. If the thickness of the anode interlayer is excessively small, lithium dendrites formed between the anode interlayer and the anode current collector may cause the anode interlayer to collapse, making it difficult to improve the cycle characteristics of a lithium battery. If the charge capacity of the anode interlayer excessively increases, a lithium battery employing the anode 20 may have deterioration in the energy density, making it difficult to improve the cycle characteristics of the lithium battery. The charge capacity of the cathode active material layer may be obtained by multiplying the charge capacity density (mAh/g) of the cathode active material by the mass of the cathode active material in the cathode active material layer. If several types of the cathode active material are used, for each cathode active material, the charge capacity density may be multiplied by the mass, and the sum of these values may be the charge capacity of the cathode active material layer. The charge capacity of the anode interlayer may be calculated in the same way. That is, the charge capacity of the anode interlayer may be obtained by multiplying the charge capacity density (mAh/g) of the anode active material by the mass of the anode active material in the anode interlayer. If several types of the anode active material are used, for each anode active material, the charge capacity density is multiplied by the mass, and the sum of these values is the charge capacity of the anode interlayer. Here, the charge capacity densities of the cathode active material and the anode active material are capacities estimated by using an all-solid-state half-cell using a lithium metal as a counter electrode. The charge capacities of the cathode active material and the anode interlayer may be directly measured by directly measuring the charge capacity obtained by using the all-solid-state half-cell. If the measured charge capacity is divided by the mass of each active material, the charge capacity density may be obtained. Alternatively, the charge capacities of the cathode active material layer and the anode interlayer may be initial charge capacity measured during charging at the first cycle.

[Anode: Anode active material layer]

In another embodiment, the anode 20 may further include the anode active material layer including a lithium metal or a lithium alloy arranged between the anode current collector 21 and the electrodeposition induction layer 22.

The anode active material layer (not shown) may include, for example, lithium foil, lithium powder, plated lithium,

a carbon-based material, or a combination thereof. The anode active material layer including lithium foil may be, for example, a lithium metal layer. The anode active material layer including lithium powder may be introduced by coating the anode current collector with a slurry containing lithium powder and a binder. The binder may be, for example, a fluorine-based binder such as PVDF. The anode active material layer may be free of a carbon-based anode active material.

[Lithium battery]

A lithium battery according to an embodiment may include: a cathode; the anode; and an electrolyte arranged between the cathode and the anode. By including the anode, the lithium battery may provide both improved capacity and excellent lifespan at the same time.

For example, the lithium battery may be a lithium primary battery, a lithium secondary battery, a lithium-sulfur battery, a lithium-air battery, etc., but is not limited thereto. Any lithium battery available in the art may be used.

The lithium battery may be, for example, prepared according to the following method, but the preparation method thereof is not necessarily limited to the exemplified method and may be adjusted to required conditions.

(Anode)

An anode including the electrodeposition induction layer that includes the aforementioned binder is prepared

(Cathode)

First, a cathode active material composition may be prepared by mixing a cathode active material, a conductive material, a binder, and a solvent. The prepared cathode active material composition may be directly applied onto an aluminum current collector, and dried to prepare a cathode plate having a cathode active material layer formed thereon. According to other embodiments, the cathode active material composition may be cast on a separate support, and then a film obtained by peeling off from the support may be laminated onto the aluminum current collector to prepare a cathode plate having a cathode active material layer formed thereon.

As the cathode active material, any material available as the lithium-containing metal oxide in the art may be used. For example, at least one composite oxide of lithium and a metal selected from Co, Mn, Ni, and a combination thereof may be used, and a specific example thereof may be a compound represented by one of the following formulae: $Li_aA_1$-2 (where $0.90 \le a \le 1$ and $0 \le b \le 0.5$); $Li_aE_{1-b}B_bO_{2-c}D_c$ (where $0.90 \le a \le 1$, $0 \le b \le 0.5$, and $0 \le c \le 0.05$); $LiE_{2-b}B_bO_{4-c}D_c$ (where $0 \le b \le 0.5$ and $0 \le c \le 0.05$); $Li_aNi_{1-s-c}Co_sB_cD_\alpha$ (where $0.90 \le a \le 1$, $0 \le b \le 0.5$, $0 \le c \le 0.05$, and $0<\alpha \le 2$); $Li_aNi_{1-b-c}Co_bB_cO_{2-\alpha}F_\alpha$ (where $0.90 \le a \le 1$, $0 \le b \le 0.5$, $0 \le c \le 0.05$, and $0<\alpha \le 2$); $Li_aNi_{1-b-c}Co_bB_cO_{2-\alpha}F_2$ (where $0.90 \le a \le 1$, $0 \le b \le 0.5$, $0 \le c \le 0.05$, and $0<\alpha<2$); $Li_aNi_{1-b-c}Mn_bB_cD_\alpha$ (where $0.90 \le a \le 1$, $0 \le b \le 0.5$, $0 \le c \le 0.05$, and $0<\alpha \le 2$); $Li_aNi_{1-b-c}Mn_bB_cO_{2-\alpha}F_\alpha$ (where $0.90 \le a \le 1$, $0 \le b \le 0.5$, $0 \le c \le 0.05$, and $0<\alpha<2$); $Li_aNi_{1-b-c}Mn_bB_cO_{2-\alpha}F_2$ (where $0.90 \le a \le 1$, $0 \le b \le 0.5$, $0 \le c \le 0.05$, and $0<\alpha<2$); $Li_aNi_bE_cG_dO_2$ (where $0.90 \le a \le 1$, $0 \le b \le 0.9$, $0 \le c \le 0.5$, and $0.001 \le d \le 0.1$); $Li_aNi_eCo_cMn_dGeO_2$ ($0.90 \le a \le 1$, $0 \le b \le 0.9$, $0 \le c \le 0.5$, $0 \le d \le 0.5$, and $0.001 \le e \le 0.1$); $Li_aNiG_bO_2$ ($0.90 \le a \le 1$ and $0.001 \le b \le 0.1$); $Li_aCoG_bO_2$ ($0.90 \le a \le 1$ and $0.001 \le b \le 0.1$); $Li_aMnG_bO_2$ ($0.90 \le a \le 1$ and $0.001 \le b \le 0.1$); $Li_aMn_2G_bO_4$ ($0.90 \le a \le 1$ and $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (were $0 \le f \le 2$); $Li_{(3-f)}Fe_2(PO_4)_3$ ($0 \le f \le 2$); and $LiFePO_4$.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound in which a coating layer is additionally provided on the surface of the aforementioned compound may be also used, and a mixture of the aforementioned compound and a compound additionally provided with a coating layer may be also used. The coating layer provided on the surface of the compound may include, for example, a coating element compound, such as an oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, or the like. A detailed description of the coating method will be omitted because it may be well understood by those skilled in the art.

For example, the cathode active material may be $Li_aNi_xCo_yM_zO_{2-b}A_b$ (where $1.0 \le a \le 1.2$, $0 \le b \le 0.2$, $0.8 \le x<1$, $0<y \le 0.3$, $0<z \le 0.3$, and $x+y+z=1$, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is F, S, Cl, Br, or a combination thereof), $LiNi_xCo_yMn_zO_2$ (where $0.8 \le x \le 0.95$, $0 \le y \le 0.2$, $0<z \le 0.2$, and $x+y+z=1$), $LiNi_xCo_yAl_zO_2$ (where $0.8 \le x \le 0.95$, $0 \le y \le 0.2$, $0<z \le 0.2$, and $x+y+z=1$), $LiNi_xCo_yMn_zAl_wO_2$

(where 0.8≤x≤0.95, 0≤y≤0.2, 0<z≤0.2, 0<w≤0.2, and x+y+z+w=1), $Li_aCo_xM_yO_{2-b}A_b$ (where 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), $Li_aNi_xMn_yM'_zO_{2-b}A_b$ (where 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), $Li_aM1_xM2_yPO_{4-b}X_b$ (where, 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), or a combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof), or $Li_aM3_zPO_4$ (where 0.90≤a≤1.1 and 0.9≤z≤1.1, and M3 may be chromium (Cr), manganese (Mn), iron (Fe), cobalt (Co), nickel (Ni), copper (Cu), zirconium (Zr), or a combination thereof).

Examples of the conductive material are: carbon black, graphite particulates, natural graphite, artificial graphite, acetylene black, Ketjen black, carbon fibers; carbon nanotubes; metallic powders, metallic fibers, or metallic tubes of copper, nickel, aluminum, silver, and the like; and a conductive polymer such as a polyphenylene derivative. However, embodiments are not limited thereto, and any suitable conductive material available in the art may be used. Alternatively, the cathode may not include, for example, a separate conductive material.

Examples of the binder are a vinylidene fluoride/hexafluoropropylene copolymer, polyvinylidene fluoride, polyacrylonitrile, polymethyl methacrylate, PTFE, a mixture of the aforementioned polymers, a styrene butadiene-rubber polymer, and the like, and examples of the solvent are N-methyl pyrrolidone (NMP), acetone, water, and the like. However, embodiments are not limited thereto, and any suitable binder and solvent available in the art may be used.

A plasticizer or a pore-forming agent may be added to the cathode active material composition to form pores in an electrode plate.

The amounts of the cathode active material, the conductive material, the binder, and the solvent used in the cathode may be at levels general for use in a lithium battery. Depending on the use and configuration of a lithium battery, one or more of the conductive material, the binder, and the solvent may be omitted.

An amount of the binder included in the cathode may be 0.1 wt% to 10 wt% or 0.1 wt% to 5 wt%, based on the total weight of the cathode active material layer. The amount of the cathode active material included in the cathode may be 80 wt% to 99 wt%, 90 wt% to 99 wt%, or 95 wt% to 99 wt%, based on the total weight of the cathode active material layer.

(Separator)

Next, a separator to be arranged between the cathode and the anode may be prepared.

The separator may be any suitable separator commonly used in a lithium battery. The separator may have, for example, low resistance to migration of ions in an electrolyte and have electrolyte solution-retaining ability. The separator may be, for example, glass fibers, polyester, Teflon, PE, PP, PTFE, and a combination thereof, each of which may be in a non-woven fabric form or a woven fabric form. For a lithium-ion battery, a rollable separator including, for example, PE or PP may be used. A separator with a good organic electrolyte solution-retaining ability may be used for a lithium-ion polymer battery.

The separator may be, for example, prepared according to the following example method, but embodiments are not limited thereto, and the method may be controlled according to the required conditions.

First, a separator composition may be prepared by mixing a polymer resin, a filler, and a solvent. Then, the separator composition may be directly coated and dried on the electrode to form a separator. In some embodiments, a separator film obtained by casting the separator composition on a support, drying, and separating it from the support may be laminated on an electrode to form a separator.

The polymer used in the separator preparation is not limited, and any suitable polymer available as the binder for an electrode plate may be used. For example, a vinylidene fluoride/hexafluoropropylene copolymer, polyvinylidene fluoride (PVDF), polyacrylonitrile, polymethyl methacrylate, or a mixture thereof may be used.

(Electrolyte)

Next, the electrolyte may be prepared.

The electrolyte may be, for example, a liquid electrolyte, a solid electrolyte, a gel electrolyte, or a combination thereof.

The electrolyte may be, for example, an organic electrolyte solution. The organic electrolyte solution may be, for example, prepared by dissolving a lithium salt in an organic solvent.

For use as the organic solvent, any material available as the organic solvent in the art may be used. Examples of the organic solvent are propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof. organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

For use as the lithium salt, any material available as the lithium salt in the art may be also used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C{\times}F_{2x+1}SO_2)(C_yF_{2y+1}SO_2)$ (where $1\leq x\leq 20$ and $1\leq y\leq 20$), LiCl, LiI, or a mixture thereof. A concentration of the lithium salt may be, for example, 0.1 M to 5.0 M.

The solid electrolyte may include, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where $0<x<2$ and $0\leq y<3$), $BaTiO_3$, $Pb(Zr,Ti)O_3$(PZT), $Pb_{1-x}La_xZr_{1-y}Ti_yO_3$(PLZT)(where $O\leq x<1$ and $O\leq y<1$), $PB(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti, Ge)_{2-\times}Si_yP_{3-y}O_{12}$ (where $0\leq x\leq 1$ and $0\leq y\leq 1$), $Li_xLa_yTiO_3$ (where $0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}$(LLZO) and $Li_{3+x}La_3Zr_{2-a}M_aO_{12}$ (M-doped LLZO)(where M may be Ga, W, Nb, Ta, or Al, x may be an integer from 1 to 10, and $0<a<2$).

The sulfide-based solid electrolyte may include, for example, lithium sulfide, silicon sulfide, phosphorus sulfide, boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ or $P_2S_5$. The particles of the sulfide-based solid electrolyte particles are known to have higher lithium ionic conductivity than other inorganic compounds. For example, the sulfide-based solid electrolyte may include $Li_2S$ and $P_2S_5$. If the sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In some embodiments, an inorganic solid electrolyte prepared by adding $Li_3PO_4$, a halogen, a halogen compound, $Li_{2+2x}Zn_{1-x}GeO_4$ ("LISICON", where $0\leq x<1$), $Li_{3+y}PO_{4-x}N_x$ ("LIPON")(where $0<x<4$ and $0<y<3$), $Li_{3.25}Ge_{0.25}P_{0.75}S_4$("ThioLISICON"), $Li_2O$-$Al_2O_3$-$TiO_2$-$P_2O_5$("LATP"), or the like to an inorganic solid electrolyte, such as $Li_2S$-$P_2S_5$, $SiS_2$, $GeS_2$, $B_2S_3$, or a combination thereof, may be used as the sulfide solid electrolyte. Non-limiting examples of the sulfide solid electrolyte material are: $Li_2S$-$P_2S_5$; $Li_2S$-$P_2S_5$-LiX (where X may be a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (where $0<m<10$, $0<n<10$, and Z may be Ge, Zn, or Ga); $Li_2S$-$GeS_2$; $Li_2S$-$SiS_2$-$Li_3PO_4$; and $Li_2S$-$SiS_2$-$Li_pMO_q$ (where $0<p<10$, $0<q<10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. In addition, a calcination process may be performed after the treatment. The sulfide-based solid electrolyte may be amorphous or crystalline, or may be in a mixed state.

The polymer solid electrolyte may include, for example, a mixture of a lithium salt and a polymer or a polymer including an ion-conducting functional group. The polymer solid electrolyte may be, for example, a polymer electrolyte not containing a liquid electrolyte. The polymer of the polymer solid electrolyte may include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ether ketone)(SPEEK), sulfonated poly(arylene ether ketone ketone sulfone)(SPAEKKS), sulfonated poly(aryl ether ketone) (SPAEK), poly[bis(benzimidazobenzisoquinolinones)](SPBIBI), poly(styrene sulfonate)(PSS), lithium 9,10-diphenylanthracene-2-sulfonate ($DPASLi^+$), or a combination thereof, but embodiments are not limited thereto. Any material available

as the polymer electrolyte in the art may be used. For use as the lithium salt, any material available as the lithium salt in the art may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(where x and y may each be between 1 to 20), LiCl, LiI, or a mixture thereof.

The gel-type electrolyte may be, for example, a gel polymer electrolyte. The gel polymer electrolyte may include, for example, a liquid electrolyte and a polymer, or may be, for example, an electrolyte including an organic solvent and a polymer including an ion-conducting functional group. The liquid electrolyte may contain, for example, ionic liquid, a mixture of a lithium salt and an organic solvent, a mixture of ionic liquid and an organic solvent, or a mixture of a lithium salt, ionic liquid, and an organic solvent. The polymer may be selected from polymers used in solid polymer electrolytes. The organic solvent may be selected from organic solvents used in liquid electrolytes. The lithium salt may be selected from lithium salts used in solid polymer electrolytes. The ionic liquid may have a melting point below the room temperature, and may contain a salt in a liquid state at room temperature or a molten salt at room temperature, each consisting of only ions. The ionic liquid may include, for example, one or more selected from compounds including: a) one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) one or more anions selected from $BF_4$-, $PF_6$-, $AsF_6$-, $SbF_6$-, $AlCl_4$-, $HSO_4$-, $ClO_4$-, $CH_3SO_3$-, $CF_3CO_2$-, Cl-, Br-, I-, $SO_4$-, $CF_3SO_3$-, $(FSO_2)_2N$-, $(C_2F_5SO_2)_2N$-, $(C_2F_5SO_2)(CF_3SO_2)N$-, and $(CF_3SO_2)_2N$-. A gel polymer electrolyte may be formed by immersing a polymer solid electrolyte in an electrolyte solution within a lithium battery. The gel electrolyte may further include inorganic particles.

(Lithium battery)

Referring to FIG. 3, a lithium battery 1 according to an embodiment includes a cathode 3, an anode 2, and a separator 4. The cathode 3, the anode 2, and the separator 4 may be wound or folded to form a battery structure 7. The formed battery structure 7 may be accommodated in a battery case 5. Then, the battery case 5 may be filled with an organic electrolyte solution, and sealed with a cap assembly 6, thereby completing the manufacture of the lithium battery 1. The battery case 5 may be a cylindrical-type, but the shape of the battery case 5 is not limited thereto. For example, the battery case 5 may be a square-type, a thin-film type, or the like.

Referring to FIG. 4, the lithium battery 1 according to embodiments may include the cathode 3, the anode 2, and the separator 4. The separator 4 may be arranged between the cathode 3 and the anode 2, and the cathode 3, the anode 2, and the separator 4 may be wound or folded to form a battery structure 7. The formed battery structure 7 may be accommodated in a battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

Referring to FIG. 5, the lithium battery 1 according to embodiments may include the cathode 3, the anode 2, and the separator 4. The separator 4 may be disposed between the cathode 3 and the anode 2 to form the battery structure 7. The battery structure 7 may be laminated in a bi-cell structure, and then accommodated in the battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

A pouch-type lithium battery each corresponds to use of a pouch as a battery case for lithium batteries of FIGS. 3 to 5. The pouch-type lithium battery may include at least one battery assembly. The separator may be arranged between the cathode and the anode to form a battery structure. The battery assembly may be laminated as a bi-cell structure, impregnated with an organic electrolyte solution, and accommodated and sealed in a pouch to complete the manufacture of a pouch-type lithium battery. For example, although not shown in the drawings, the above-described cathode, anode, and separator may be simply stacked and accommodated in a pouch in the form of an electrode assembly, or may be wound or folded into an electrode assembly in the form of a jelly roll to be then accommodated in a pouch. Then, an organic electrolyte solution may be injected into the pouch and sealed to complete the manufacture of a lithium battery.

Since the lithium battery has excellent lifespan characteristics and excellent high-rate characteristics, the lithium battery may be used in, for example, an electric vehicle (EV). For example, the lithium metal battery may be used in a hybrid vehicle, such as a plug-in hybrid electric vehicle (PHEV) or the like. The lithium metal battery may also be applicable to the fields requiring high-power storage. For example, the lithium metal battery may be used in an electric bicycle, a power tool, or the like.

A plurality of the lithium batteries may be stacked to form a battery module, and a plurality of the battery modules

may form a battery pack. The battery pack may be used in a device that requires high capacity and large output. For example, the battery pack may be used in a laptop computer, a smart phone, an electronic vehicle, or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

The lithium battery including the solid electrolyte will be described in more detail below.

(All-solid-state lithium battery)

The lithium battery may be, for example, an all-solid-state lithium battery including a solid electrolyte. By including the anode, the all-solid-state lithium battery may provide both improved capacity and excellent lifespan at the same time.

The all-solid-state lithium battery may be, for example, prepared according to the following method, but the preparation method thereof is not necessarily limited to the exemplified method and may be adjusted to required conditions.

Referring to FIGS. 6 and 7, an all-solid lithium battery 1 includes: the cathode 10; the anode 20; and a solid electrolyte arranged between the cathode 10 and the anode 20. The solid electrolyte layer 30 may include, for example, an inorganic solid electrolyte. The solid electrolyte layer 30 may include, for example, a sulfide-based solid electrolyte or an oxide-based solid electrolyte.

(Anode)

The anode include a lithium metal or a lithium alloy is prepared.

(Cathode)

Referring to FIGS. 6 and 7, the cathode 10 includes: a cathode current collector 11; and a cathode active material layer 12 disposed on the cathode current collector 11. The cathode active material 12 may include a cathode active material. A description of the cathode active material is referred to the lithium battery.

The cathode active material layer 12 may further include, a solid electrolyte in addition to the cathode active material. The solid electrolyte included in the cathode 10 may be identical to or different from the solid electrolyte included in the solid electrolyte layer 30. Details on the solid electrolyte included in the cathode 10 may be understood by referring to the solid electrolyte layer 30. The solid electrolyte included in the cathode active material layer 12 may have a smaller average particle diameter D50 than the solid electrolyte included in the solid electrolyte layer 30. For example, the average particle diameter D50 of the solid electrolyte included in the cathode active material layer 12 may be 90 % or less, 80 % or less, 70 % or less, 60 % or less, 50 % or less, 40 % or less, 30 % or less, or 20 % or less, of the particle diameter D50 of the solid electrolyte included in the solid electrolyte layer 30. The average particle diameter D50 of the solid electrolyte included in the cathode active material 12 may be, for example, 0.1 μm to 2 μm, 0.2 μm to 1.5 μm, or 0.3 μm to 1.0 μm. An amount of the solid electrolyte included in the cathode active material 12 may be 1 to 15 wt%, 5 to 15 wt%, or 8.0 to 12.0 wt%, based on the total weight of the cathode active material 12.

The cathode active material layer 12 may include a binder. The binder may be, for example, SBR, polytetrafluoroethylene, polyvinylidene fluoride, polyethylene, or the like, but is not necessarily limited thereto. Any material available as a binder in the art may be used. An amount of the binder included in the cathode active material 12 may be, for example, 0.1 to 5 wt%, 0.5 to 3 wt%, or 1.0 to 2.0 wt%, based on the total weight of the cathode active material 12.

The cathode active material layer 12 may include a conductive material. The conductive material may be, for example, a carbon-based conductive material or a metal-based conductive material. Examples of the conductive material are graphite, carbon black, acetylene black, ketjen black, carbon fibers, carbon tubes, metal powders, and the like, but are not necessarily limited thereto. Any material available as a conductive material in the art may be used. An amount of the conductive material included in the cathode active material 12 may be, for example, 0.1 to 10 wt%, 0.5 to 5 wt%, or 1.0 to 4.0 wt%, based on the total weight of the cathode active material 12. The cathode active material layer 12 may further include, for example, an additive, such as a filler, a coating agent, a dispersant, an ion conductive auxiliary agent, or the like, in addition to the cathode active material, the solid electrolyte, the binder, and the cathode active material described above.

The cathode current collector 11 may use, for example, a plate or a foil, consisting of Al, In, Cu, Mg, SUS, Ti, Fe, Co, Ni, Zn, Ge, Li, or an alloy thereof. Use of the cathode current collector 11 may be omitted. The cathode current collector 11 may further include a carbon layer arranged on one or both surfaces of a metal substrate. When the carbon layer is additionally arranged on the metal substrate, a metal of the metal substrate may be prevented from being corroded by a solid electrolyte included in the cathode layer 10, and the interfacial resistance between the cathode active material layer

12 and the cathode current collector 11 may be reduced. A thickness of the carbon layer may be, for example, 1 μm to 5 μm, 1 μm to 4 μm, or 1 μm to 3 μm. When the carbon layer is too thin, the contact between the metal substrate and the solid electrolyte may not be completely blocked. When the carbon layer is too thick, the energy density of an all-solid battery may be reduced. The carbon layer may include amorphous carbon, crystalline carbon, or the like. A thickness of the cathode current collector 11, which includes the substrate and selectively the carbon layer, may be, for example, 10 μm to 50 μm, 10 μm to 40 μm, or 10 μm to 30 μm, but is not necessarily limited thereto. The thickness may be selected according to the characteristics of the required all-solid-state lithium battery.

Although not shown in the drawings, the cathode 10 includes the cathode current collector 11 and the cathode active material layer 12 arranged on the cathode current collector 11, and may further include an inactive member arranged on one side of the cathode active material layer 12. An area of the cathode active material layer 12 may be smaller than an area of the solid electrolyte layer 30 in contact with the cathode active material layer 12. The inactive member is arranged surrounding the sides of the cathode active material layer 12 such that it may compensate for the area error between the cathode active material layer 12 and the solid electrolyte layer 30. The inactive member may be a member not including an electrochemically active material such as an electrode active material. The electrode active material may be a material that allows intercalation/deintercalation of lithium. The inactive member may be a membrane consisting of any material commonly used in the art, other than the electrode active material. The inactive member surrounds the sides of the cathode active material layer 12, and thus may be in contact with the solid electrolyte layer 30. When the inactive member is in contact with the solid electrolyte layer 30 by surrounding the sides of the cathode active material layer 12, cracks occurring in the solid electrolyte layer 30, which is not in contact with the cathode active material layer 12, due to a pressure difference in the solid electrolyte layer 30 may be suppressed effectively. When the area of the inactive member compensates for the difference between the area of the cathode active material layer 10 and the area of the solid electrolyte layer 30, cracks occurring in the solid electrolyte layer 30 due to a pressure difference during a pressing process may be suppressed effectively. The inactive member may be arranged between the cathode current collector 11 and the solid electrolyte layer 30 that face each other. In this regard, the inactive member may serve as a filler filling the space between the cathode current collector 11 and the solid electrolyte layer 30 that face each other. The inactive member may include one or more selected from a lithium ion insulator and a lithium ion conductor. The inactive member may be an electronic insulator. That is, the inactive member may not be an electronic conductor. The inactive member may be an organic material, ab inorganic material, or an organic-inorganic composite material. The organic material may be, for example, a polymer. The inorganic material may be, for example, ceramics such as a metal oxide. The organic-inorganic composite material may be a composite of a polymer and a metal oxide. The inactive member may include, for example, one or more selected from an insulating polymer, an ion-conductive polymer, an insulating inorganic material, an oxide-based solid electrolyte, and a sulfide-based solid electrolyte. The inactive member may be, for example, an olefin-based polymer such as PP and PE. The inactive member may be, for example, a gasket. A thickness of the inactive member may be the same or similar to the thickness of the cathode active material layer 12.

(Solid electrolyte layer)

Referring to FIGS. 6 and 7, the solid electrolyte layer 30 may be arranged between the cathode 10 and the anode 20, and may include, for example, a sulfide-based solid electrolyte.

The sulfide-based solid electrolyte may include, for example, one or more selected from: $Li_2S-P_2S_5$, $Li_2S-P_2S_5-LiX$ (X is a halogen atom), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is one of Ge, Zn, and Ga), $Li_2S-GeS_2$, $Li_2S-SiS_2-Li_3PO_4$, $Li_2S-SiS_2-Li_pMO_q$ (p and q are positive numbers, and M is one of P, Si, Ge, B, Al, Ga, and In), $Li_{7-x}PS_{6-x}Cl_x$, (where $0 \leq x \leq 2$), $Li_{7-x}PS_{6-x}Br_x$, ($0 \leq x \leq 2$), and $Li_{7-x}PS_{6-x}I_x$ ($0 \leq x \leq 2$). The sulfide-based solid electrolyte may be, for example, prepared by treating a starting material, such as $Li_2S$, $P_2S_5$, and the like, by a melting quenching method, a mechanical milling method, or the like. After such treatment, heat treatment may be then performed thereon. The solid electrolyte may be amorphous or crystalline, or may be in a mixed state. The solid electrolyte may include, for example, S, P, and Li, as at least a constituent element among the aforementioned sulfide-based solid electrolyte material. For example, the solid electrolyte may be a material containing $Li_2S-P_2S_5$. When $Li_2S-P_2S_5$ is included as the sulfide-based solid electrolyte material for forming the solid electrolyte, a mixing molar ratio of $Li_2S$ to $P_2S_5$ ($Li_2S:P_2S_5$) may be, for example, in a range of about 50:50 to about 90:10.

The sulfide-based solid electrolyte may include, for example, an argyrodite-type solid electrolyte represented by Chemical Formula 1:

Chemical Formula 1 $$Li^{+}_{12-n-x}A^{n+}X^{2-}_{6-x}Y^{-}_{x}$$

wherein, in the chemical formula, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an

argyrodite-type compound including one or more selected from $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). The sulfide-based solid electrolyte may be, for example, an argyrodite-type compound including at least one selected from $Li_6PS_5Cl$, $Li_6PS_5Br$, and $Li_6PS_4I$. The density of the argyrodite-type solid electrolyte may be 1.5 g/cc to 2.0 g/cc. When the density of the argyrodite-type solid electrolyte is 1.5 g/cc or more, the internal resistance of the all-solid secondary battery is reduced, and accordingly, the penetration of Li into the solid electrolyte layer may be suppressed effectively.

The elastic modulus, i.e., Young's modulus, of the sulfide-based solid electrolyte may be, for example, 35 GPa or less, 30 GPa or less, 27 GPa or less, 25 GPa or less, or 23 GPa or less. The elastic modulus, i.e., Young's modulus, of the sulfide-based solid electrolyte may be, for example, 10 to 35 GPa, 10 to 30 GPa, 10 to 27 GPa, 10 to 25 GPa, or 10 to 23 GPa. When the elastic modulus of the sulfide-based solid electrolyte is within the ranges above, the temperature and/or pressure required for sintering is reduced, and thus sintering of the solid electrolyte may be performed more easily.

An average particle diameter D50 of the solid electrolyte included in the solid electrolyte layer 30 may be, for example, 1 μm to 10 μm, 1.5 μm to 7 μm, or 2 μm to 5 μm.

An amount of the sulfide-based solid electrolyte included in the solid electrolyte layer 30 may be, for example, 97 to 100 wt%, 98 to 99.9 wt%, or 98.5 to 99.0 wt%, based on the total weight of the solid electrolyte layer 30.

The solid electrolyte layer 30 may further include, for example, a binder. The binder included in the solid electrolyte layer 30, 30a, or 30b may include, for example, SBR, PTFE, PVDF, polyethylene, or the like, but is not limited thereto. Any material available as a binder in the art may be used. The binder included in the solid electrolyte layer 30 may be the same as or different from the binders included in the cathode active material layer 12 and the anode active material layer 22.

An amount of the binder included in the solid electrolyte layer 30 may be, for example, 0.1 to 3 wt%, 0.5 to 2 wt%, or 1.0 to 2.0 wt%, based on the total weight of the solid electrolyte layer 30.

Referring to FIGS. 6 and 7, an all-solid-state lithium battery 1 includes a solid electrolyte layer 30, a cathode layer 10 arranged on one side of the solid electrolyte layer 30, and an anode layer 20 disposed on the other side of the solid electrolyte layer 30. The cathode layer 10 includes the cathode active material layer 12 that is in contact with the solid electrolyte layer 30, and the cathode current collector 11 that is in contact with the cathode current collector 11, and the anode layer 20 includes the anode active material layer 22 that is in contact with the solid electrolyte layer 30, and the anode current collector 21 that is in contact with the anode active material layer 22. The all-solid-state lithium battery 1 may be formed in a way that, for example, the cathode active material layer 12 and the anode active material layer 22 are respectively arranged on both sides of the solid electrolyte layer 30, and then the cathode current collector 11 and the anode current collector 21 are respectively arranged on the cathode active material layer 12 and the anode active material layer 22, thereby completing the manufacture of the all-solid-state lithium metal battery 1. Alternatively, the anode active material layer 22, the solid electrolyte layer 30, the cathode active material layer 12, and the cathode current collector 11 may be stacked in the stated order on the anode current collector 21 to complete the manufacture of the all-solid-state lithium metal battery 1.

[Preparation method for binder]

A method of preparing a binder according to another embodiment includes: preparing a composition for forming a binder by mixing an ethylene-based unsaturated monomer including a carboxyl group, an ethylene-based unsaturated monomer including a nitrile group, and an ethylene-based unsaturated monomer including a polyalkyleneglycol group; and heat-treating the composition for forming a binder to prepare a binder.

The ethylene-based unsaturated monomer including a carboxyl group, the ethylene-based unsaturated monomer including a nitrile group, and the ethylene-based unsaturated monomer including a polyalkyleneglycol group may be the same as those described in connection with the binder above. The composition for forming a binder may contain a non-aqueous solvent.

The heat-treating of the composition for forming a binder may be performed at a temperature of 100 °C or more, but the time for the heat-treating is not particularly limited. However, the time for which the composition for forming a binder is heat-treated at 100 °C or more may be, for example, 1 to 10 hours. For example, the time for which the composition for forming a binder is heat-treated at 160 °C or more may be 1 to 5 hours. For example, the time for which the composition for forming a binder is heat-treated at 100 °C or more may be 1 to 3 hours.

Hereinafter, the present creative idea will be described in more detail through Examples and Comparative Examples below. However, these examples are provided to represent the creative idea, and the scope of the present creative idea is not limited thereto.

(Preparation of binder)

Preparation Example 1: Acrylic acid (AA)-acrylonitrile (AN)-PEG methacrylate (PEGMA)

In a reactor, acrylic acid (AA) as a first monomer, acrylonitrile (AN) as a second monomer, and poly(ethylene glycol) methyl ether methacrylate (PEGMA, weight average molecular weight Mw of 500 g/mol) as a third monomer were added in amounts of 45 wt%, 25 wt%, and 30 wt%, respectively, and then, VA-086 initiator (Wako Pure Chemical Industries Ltd) and water were added to the reactor to proceed copolymerization.

Lithium hydroxide was added to the obtained copolymerization product, and stirred to prepare a binder solution containing AA as a first monomer, AN as a second monomer, and PEGMA as a third monomer. Here, the amount of lithium hydroxide used was adjusted such that 60 mol% of the AA as a first monomer was substituted with lithium ions, and as a result, the product thus obtained was a copolymer binder including lithium polyacrylate in which 60 mol% of the acryl groups included in the AA as a first monomer acrylic acid has been substituted with lithium ions. Here, the aqueous solution of the binder had a viscosity of 2,670 cps at 25 °C based on 8.5 wt% solid content.

Preparation Example 2: AA-AN-PEGMA

A copolymer binder was prepared in the same manner as in Preparation Example 1, except that AA as a first monomer, AN as a second monomer, and PEGMA (weight average molecular weight Mw of 500 g/mol) as a third monomer were added in a reactor in amounts of 30 wt%, 40 wt%, and 30 wt%, respectively.

Preparation Example 3: AA-AN-PEGMA

A copolymer binder was prepared in the same manner as in Preparation Example 1, except that AA as a first monomer, AN as a second monomer, and PEGMA (weight average molecular weight Mw of 500 g/mol) as a third monomer were added in a reactor in amounts of 30 wt%, 25 wt%, and 45 wt%, respectively.

Comparative Preparation Example 1: PI-F

After filling a three-neck round bottom flask with nitrogen, 9.9790 g (0.0498 mol) of 2,2'-bis(trifluoromethyl) benzidine (TFMB) and 2.5275 g (0.0166 mol) of 1,3-diaminobenzoic acid (DABA) were added thereto, and 153 g of N-methyl pyrrolidone (NMP) was added and completely dissolved by using a mechanical stirrer. Next, 14.4935 g (0.0664 mol) of 4,4'-(hexafluoroisopropylidene)diphthalic anhydride (6FDA) was added and stirred at room temperature for 24 hours to prepare fluorine-substituted polyamic acid represented by Formula 17 (6FDA/TFMB/DABA, acid equivalent weight=210 g/eq, and weight average molecular weight Mw= about 1,000,000). The fluorine-substituted polyamic acid was a random copolymer. The molar ratio of 6FDA:TFMB:DABA was 4:3:1. In Formulae 17 and 18, the molar ratio of m:n was 1:3.

Comparative Preparation Example 2: PVDF

PVDF was used as it is.

(Preparation of anode and lithium battery)

Example 1: Cu substrate/ electrodeposition induction layer (binder of Preparation Example 1, 4 μm)

(Preparation of anode)

0.1 g of the binder prepared in Preparation Example 1 and 1.9 g of denka black were added to water (e.g., D.I water), and the mixed solution was stirred at 2000 rpm several times, each for 2 minutes, using a Thinky mixer to prepare a composition for forming an electrodeposition induction layer.

The composition for forming an electrodeposition induction layer was applied onto a 10 μm-thick copper (Cu) current collector by using a doctor blade, and then the solvent was removed therefrom at 100 °C for 2 hours to thereby produce a protective layer.

As a result, an anode having an anode current collector/electrodeposition induction layer was prepared. Here, a thickness of the electrodeposition induction layer was 4 μm.

(Preparation of pouch cell)

A 20 μm-thick lithium foil was used as a counter electrode, a polypropylene separator (Celgard 3510) was

arranged between the counter electrode and the anode, and then an electrolyte was injected thereto to thereby prepare a pouch cell.

For use as the electrolyte, a solution in which 1.15 M $LiPF_6$ was dissolved in a mixed solution containing ethylene carbonate (EC), ethylmethylcarbonate (EMC), and dimethyl carbonate (DMC)(at a volume ratio of 2:4:4) was used.

Example 2: Cu substrate/electrodeposition induction layer (binder of Preparation Example 2, 4 μm)

A pouch cell was prepared in the same manner as in Example 1, except that the electrodeposition induction layer includes the binder of Preparation Example 2 instead of the binder of Preparation Example 1.

Example 3: Cu substrate/electrodeposition induction layer (binder of Preparation Example 3, 4 μm)

A pouch cell was prepared in the same manner as in Example 1, except that the electrodeposition induction layer includes the binder of Preparation Example 3 instead of the binder of Preparation Example 1.

Example 4: Cu substrate/electrodeposition induction layer (binder of Preparation Example 1, 6 μm)

A pouch cell was prepared in the same manner as in Example 1, except that the thickness of the electrodeposition induction layer was changed to 6 μm.

Example 5: Cu substrate/electrodeposition induction layer (binder of Preparation Example 1, 12 μm)

A pouch cell was prepared in the same manner as in Example 1, except that the thickness of the protective layer was changed to 12 μm.

Comparative Example 1: Cu substrate/electrodeposition induction layer binder of Comparative Preparation Example 1, 4 μm)

A pouch cell was prepared in the same manner as in Example 1, except that the electrodeposition induction layer includes the binder of Comparative Preparation Example 1 instead of the binder of Preparation Example 1.

Comparative Example 1: Cu substrate/electrodeposition induction layer binder of Comparative Preparation Example 2, 4 μm)

A pouch cell was prepared in the same manner as in Example 1, except that the electrodeposition induction layer includes the binder of Comparative Preparation Example 2 instead of the binder of Preparation Example 1.

Comparative Example 3: Cu substrate/electrodeposition induction layer free

A pouch cell was prepared in the same manner as in Example 1, except that the anode did not include the electrodeposition induction layer.

Evaluation Example 1: Evaluation of adhesion force

The adhesion force between the electrodeposition induction layer and the anode current collector of Examples 1 to 5 and Comparative Examples 1 and 2 was evaluated as follows.

The electrodeposition induction layer and the anode current collector, which are in contact with each other, of Examples 1 to 5 and Comparative Examples 1 and 2 were cut to a piece having a size of 10 mm(machine direction (MD)) X 50 mm (transverse direction (TD), and the tape (by 3M, Scotch) was adhered to the piece, leaving about 5 nm exposed at both ends. Next, using a universal testing machine (UTM) (Mode3343, Instron), one of the ends not adhered to the tape was held in the upper action grip of the machine, whereas the other end was held in the lower action grip, and then the force required to delaminate the electrodeposition induction layer and the anode current collector was measured to determine the adhesion force of the electrodeposition induction layer. To evaluate the adhesion force, the adhesion force of the electrodeposition induction layer was measured three times, and the average value was calculated for evaluation, and the measurement results are shown in Table 1.

Table 1

| | Electrodeposition induction layer | | Adhesion force [gf/mm] |
|---|---|---|---|
| | Binder | Thickness | |
| Example 1 | Preparation Example 1 | 4 μm | 2.213 |
| Example 2 | Preparation Example 2 | 4 μm | 2.099 |
| Example 3 | Preparation Example 3 | 4 μm | 1.953 |
| Example 4 | Preparation Example 1 | 6 μm | 2.194 |
| Example 5 | Preparation Example 1 | 12 μm | 2.201 |
| Comparative Example 1 | Comparative Preparation Example 1 | 4 μm | 1.124 |
| Comparative Example 2 | Comparative Preparation Example 2 | 4 μm | 1.550 |

As shown in Table 1, the electrodeposition induction layers of Examples 1 to 5 exhibited increased adhesion force and consequently improved electrode stability, as compared to those of Comparative Examples 1 and 2.

Evaluation example 2: SEM analysis

The pouch cells of Example 1 and Comparative Example 3 were charged at 25 °C and 0.1 mAh/$cm^2$, and then disassembled. Then, the electrodeposition induction layer or the electrode position induction layer formed on the anode current collector was observed under an SEM. The analysis results are shown in FIGS. 8A and 9A, respectively.

FIG. 8A is an SEM image showing the electrodeposited lithium layer formed on the electrodeposition induction layer after charging the pouch cell of Example 1 at 0.1 mAh/$cm^2$. FIG. 9A is an SEM image showing the electrodeposited lithium layer formed on the electrodeposition induction layer after charging the pouch cell of Comparative Example 3 at 0.1 mAh/$cm^2$.

Referring to FIGS. 8A and FIG. 9A, Example 1 shows that lithium was uniformly dispersed on the electrodeposition induction layer, confirming uniform growth of the electrodeposited lithium layer. Meanwhile, Comparative Example 3, which does not include the electrodeposition induction layer, shows that lithium dendrites have been formed on the anode current collector.

The pouch cells of Example 1 and Comparative Example 3 were charged to state of charge (SOC) 100 % at 25 °C, and then disassembled. Then, the electrodeposited lithium layer was observed under an SEM, and cross sections and thicknesses of the electrodeposited lithium layer and the electrodeposition induction layer were measured. The analysis results are shown in FIGS. 8B to 8C and FIGS. 9B to 9C, respectively.

FIG. 8B is an SEM image showing the electrodeposited lithium layer formed on the electrodeposition induction layer after charging the pouch cell of Example 1 to SOC 100 %. FIG. 9B is an SEM image showing the electrodeposited lithium layer formed on the electrodeposition induction layer after charging the pouch cell of Comparative Example 3 to SOC 100 %.

Referring to FIGS. 8B and 9B, it was confirmed that the electrodeposited lithium layer of Example 1 had a shape closer to a plate shape than the electrodeposited lithium layer of Comparative Example 3.

FIG. 8C is an SEM image showing the cross sections of the electrodeposited lithium layer and the electrodeposition induction layer after charging the pouch cell of Example 1 to SOC 100 %. FIG. 9C is an SEM image showing the cross sections of the electrodeposited lithium layer and the electrodeposition induction layer after charging the pouch cell of Comparative Example 3 to SOC 100 %.

Referring to FIGS. 8C and 9C, it was confirmed that the thickness of the electrodeposited lithium layer of Example 1 was 26.5 μm, and the thickness of the electrodeposited lithium layer of Comparative Example 3 was 38.5 μm. In other words, it was confirmed that, since the thickness of the electrodeposited lithium layer of Example 1 was relatively small compared to the electrodeposited lithium layer of Example 3, a dense lithium layer has been formed.

Evaluation Example 3: Evaluation charge/discharge characteristics evaluation at high temperature

The pouch cells of Examples 1 to 5 and Comparative Examples 1 to 3 were charged at a constant current with a current of 0.1 C rate at 45 °C until the voltage reached 4.3 V (vs. Li), and then charged at a constant voltage until the current reached 0.05 C while maintaining the voltage at 4.3 V. The fully charged pouch cells were left to rest for 10 minutes, and then discharged at a constant current of 0.1 C until the voltage reached 3.6 V (vs. Li) ($1^{st}$ cycle).

Next, the pouch cells were charged at a constant current with a current of 0.2 C rate until the voltage reached 4.3 V (vs. Li), and then charged at a constant voltage until the current reached 0.05 C while maintaining the voltage at 4.3 V. The

fully charged pouch cells were left to rest for 10 minutes, and then discharged at a constant current of 0.2 C until the voltage reached 3.6 V (vs. Li) (2nd cycle)(1st-2nd cycle is referred to as a formation stage).

The pouch cells that have undergone the formation stage were charged at a constant current with a current of 0.2 C rate at 45 °C until the voltage reached 4.3 V (vs. Li), and then charged at a constant voltage until the current reached 0.05 C while maintaining the voltage at 4.3 V. The fully charged pouch cells were left to rest for 10 minutes, and then discharged at a constant current of 0.5 C until the voltage reached 3.6 V (vs. Li), and this charge-discharge cycle was repeated 200 times. Some of the results of the charge/discharge test are shown in Table 2.

The capacity retention was calculated according to Equation 1:

Capacity retention [%]=[discharge capacity at $200^{th}$ cycle/discharge capacity at $3^{rd}$ cycle]$\times$100 % Equation 1

Table 2

| | Electrodeposition induction layer | | | Capacity |
|---|---|---|---|---|
| | Binder | Thickness | Capacity at $200^{th}$ cycle [mAh] | Retention ratio [% @$200^{th}$ cycle] |
| Example 1 | Preparation Example 1 | 4 μm | 15.2 | 70.2 |
| Example 2 | Preparation Example 2 | 4 μm | 14.3 | 66.5 |
| Example 3 | Preparation Example 3 | 4 μm | 13.8 | 64.2 |
| Example 4 | Preparation Example 1 | 6 μm | 14.5 | 67.0 |
| Example 5 | Preparation Example 1 | 12 μm | 13.4 | 58.4 |
| Comparative Example 1 | Comparative Preparation Example 1 PI-F | 4 μm | 12.4 | 57.1 |
| Comparative Example 2 | Comparative Preparation Example 2 PVdF | 4 μm | 11.6 | 52.5 |
| Comparative Example 3 | - | - | 10.6 | 51.3 |

As shown in Table 2, the lithium batteries of Examples 1 to 5, includes the electrodeposition induction layer including the binder, which includes: the repeating unit (A) derived from the ethylene-based unsaturated monomer including a carboxyl group; the repeating unit (B) derived from the ethylene-based unsaturated monomer including a nitrile group; and the repeating unit (C) derived from the ethylene-based unsaturated monomer including a polyalkyleneglycol group, and in this regard, the capacity and capacity retention may be improved of the lithium batteries were improved compared to the lithium batteries of Comparative Examples 1 to 3.

## Claims

**1.** A binder for electrodeposition induction layer of a lithium battery comprising: a repeating unit (A) derived from an ethylene-based unsaturated monomer including a carboxyl group;

a repeating unit (B) derived from an ethylene-based unsaturated monomer including a nitrile group; and
a repeating unit (C) derived from an ethylene-based unsaturated monomer including a polyalkyleneglycol group.

**2.** The binder of claim 1, wherein
the ethylene-based unsaturated monomer including a carboxyl group is represented by Formula 1:

Formula 1

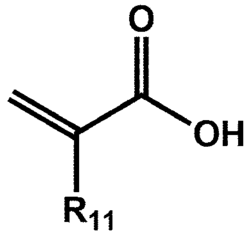

**wherein,** in Formula 1,

$R_{11}$ is: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

**3.** The binder of claim 1, wherein the ethylene-based unsaturated monomer including a carboxyl group is an acrylic acid or a methacrylic acid.

**4.** The binder of claim 1, wherein the ethylene-based unsaturated monomer including a carboxyl group further includes an ethylene-based unsaturated monomer including a carboxyl group in which hydrogen of the carboxyl group is substituted with lithium.

**5.** The binder of claim 4, wherein

the ethylene-based unsaturated monomer including a carboxyl group in which hydrogen of the carboxyl group is substituted with lithium is represented by Formula 1-1:

<Formula 1-1>

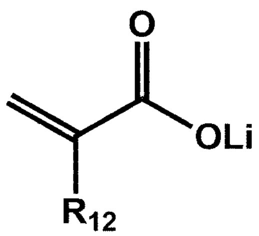

wherein, in Formula 1-1,

$R_{12}$ is: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

**6.** The binder of claim 4, wherein an amount of the ethylene-based unsaturated monomer including a carboxyl group in which hydrogen of the carboxyl group is substituted with lithium included in the ethylene-based unsaturated monomer including a carboxyl group is 50 to 90 mol%.

**7.** The binder of claim 1, wherein

the ethylene-based unsaturated monomer including a nitrile group is represented by Formula 2:

Formula 2

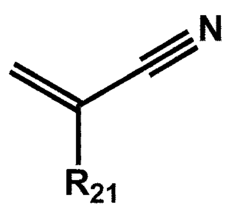

in Formula 2,

$R_{21}$ is: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen.

**8.** The binder of claim 1, wherein The ethylene-based unsaturated monomer including a nitrile group is acrylonitrile or methacrylonitrile.

**9.** The binder of claim 1, wherein
the ethylene-based unsaturated monomer including a polyalkyleneglycol group is represented by Formula 3:

Formula 3

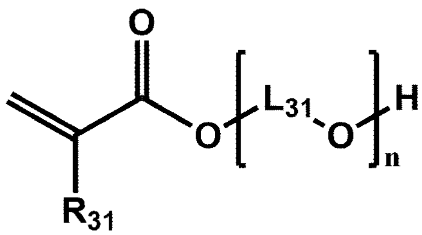

wherein, in Formula 3,

$R_{31}$ is: hydrogen; a C1-C10 alkyl group unsubstituted or substituted with a halogen; a C6-C20 aryl group unsubstituted or substituted with a hydrogen; or a C2-C20 heteroaryl group unsubstituted or substituted with a halogen, $L_{31}$ is a C1-C10 alkylene group unsubstituted or substituted with a halogen, and
n is an integer of 1 or more.

**10.** The binder of claim 1, wherein the ethylene-based unsaturated monomer including a polyalkyleneglycol group is poly(ethylene glycol) (meth)acrylate.

**11.** The binder of claim 1, wherein a weight average molecular weight Mw of the ethylene-based unsaturated monomer including a polyalkyleneglycol group is 900 g/mol or less.

**12.** The binder of claim 1, wherein,

based on a total weight of the binder,
an amount of the repeating unit (A) is 25 to 60 wt%,
an amount of the repeating unit (B) is 5 to 50 wt%, and
an amount of the repeating unit (C) is 5 to 50 wt%.

**13.** An anode comprising:

an anode current collector; and
an electrode position induction layer arranged on the anode current collector and including the binder of claim 1.

**14.** The anode of claim 13, wherein an amount of the binder is 3 to 20 wt% based on a total weight of the electrodeposition induction layer.

**15.** The anode of claim 13, wherein a thickness of the electrodeposition induction layer is 1 to 10 μm.

**16.** The anode of claim 13, wherein the electrodeposition induction layer further includes a conductive material.

**17.** The anode of claim 16, wherein the conductive material includes carbon black, acetylene black, denka black, ketjen black, carbon nanotubes, carbon nanofibers, carbon nanobelts, graphene, graphene oxide, fullerene, activated carbon, carbon fibers, or a combination thereof.

**18.** The anode of claim 14, wherein

the anode current collector includes a base film and a metal layer arranged on one side or both sides of the base film,
the base film includes a polymer, the polymer including polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**19.** A lithium battery comprising:

a cathode;
the anode of claim 13; and
an electrolyte arranged between the cathode and the anode.

**20.** The lithium battery of claim 19, wherein the electrolyte is a liquid electrolyte, a solid electrolyte, a gel electrolyte, or a combination thereof.

FIG. 1

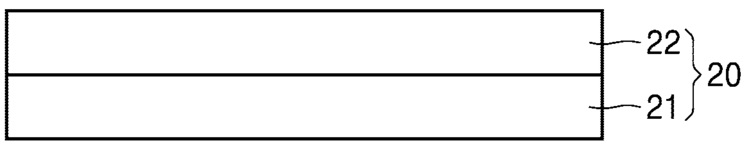

FIG. 2

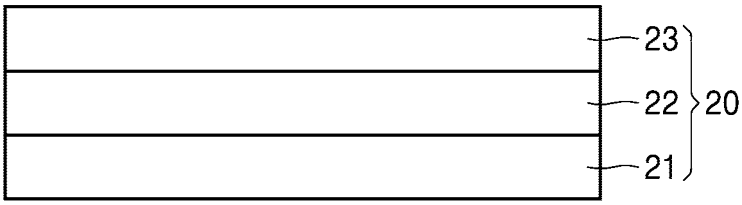

FIG. 3

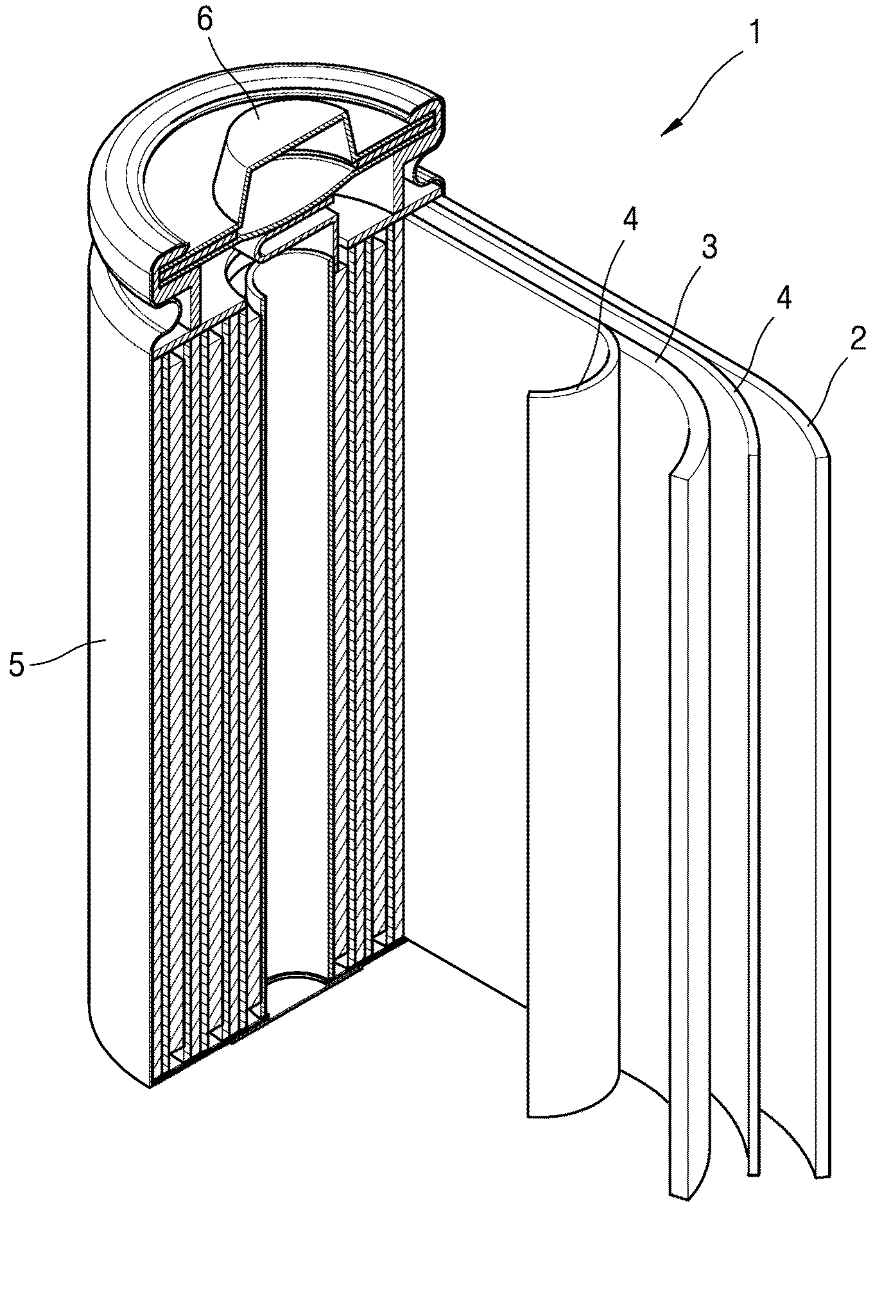

FIG. 4

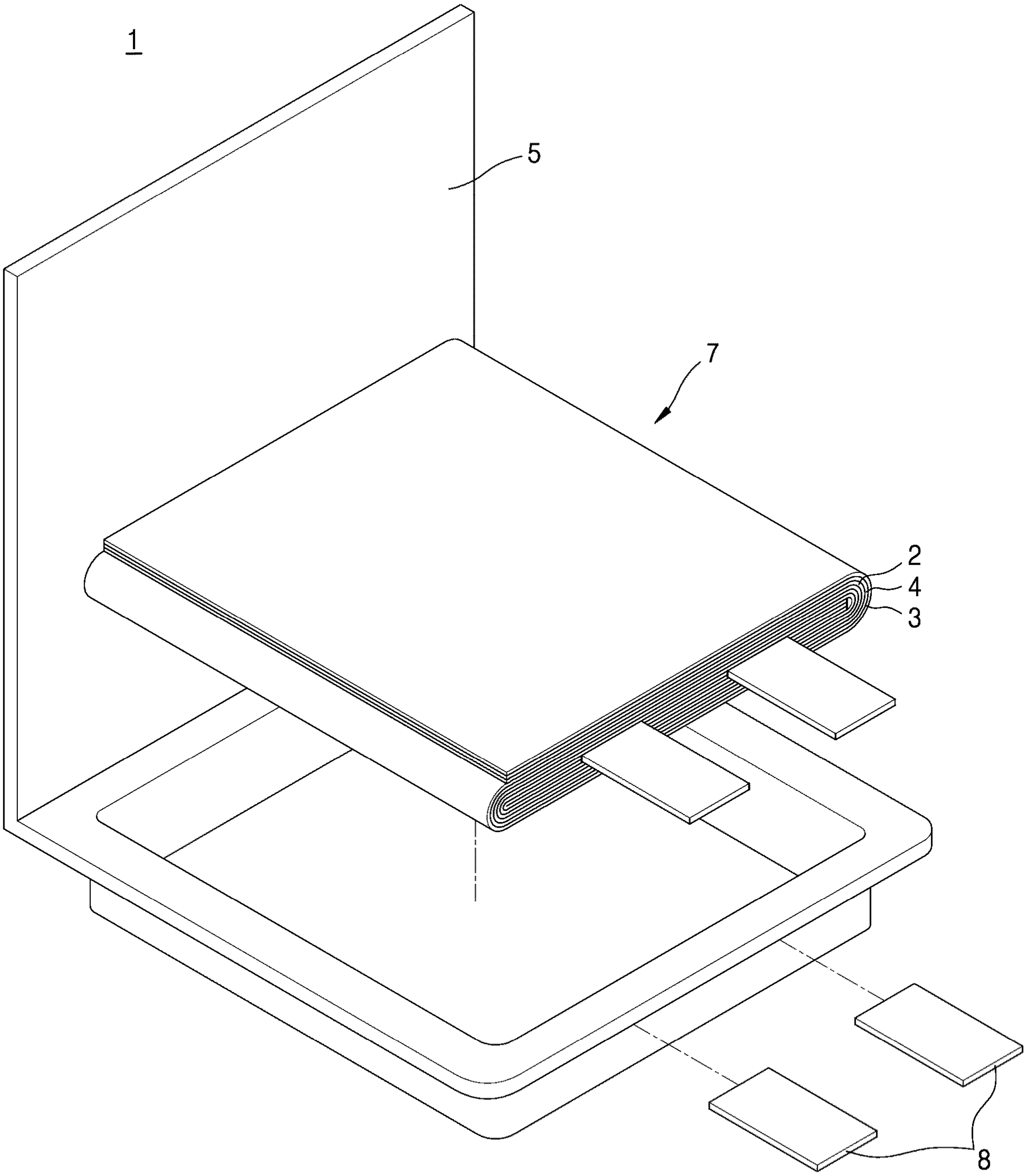

FIG. 5

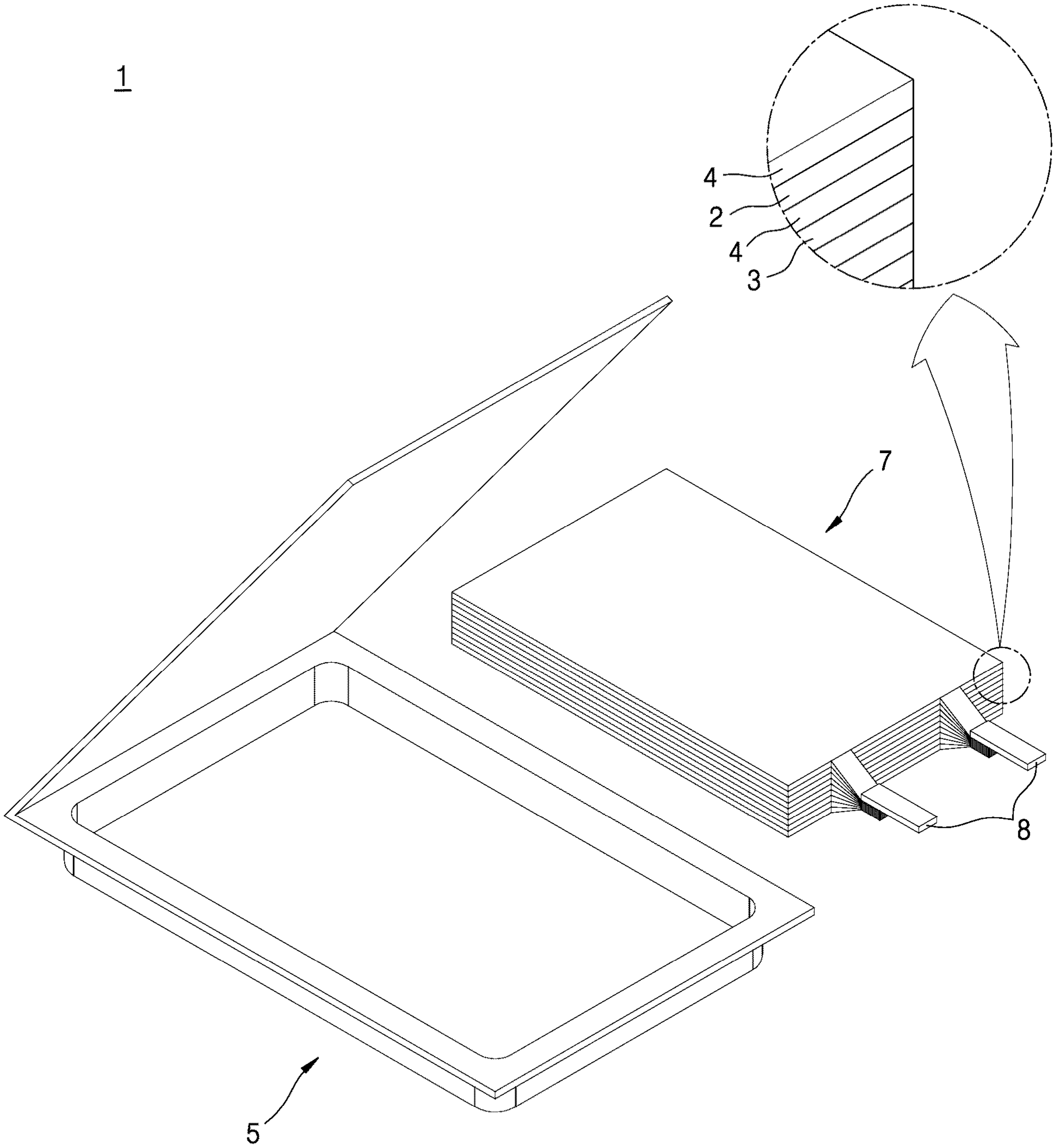

FIG. 6

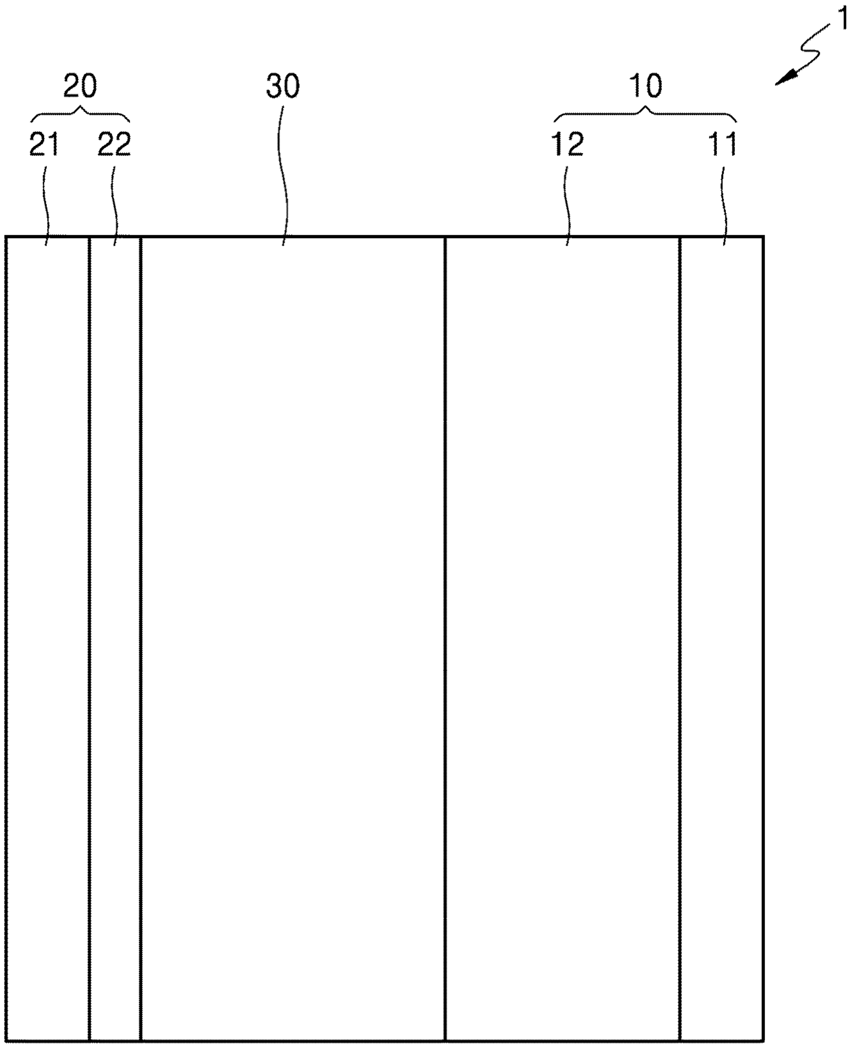

FIG. 7

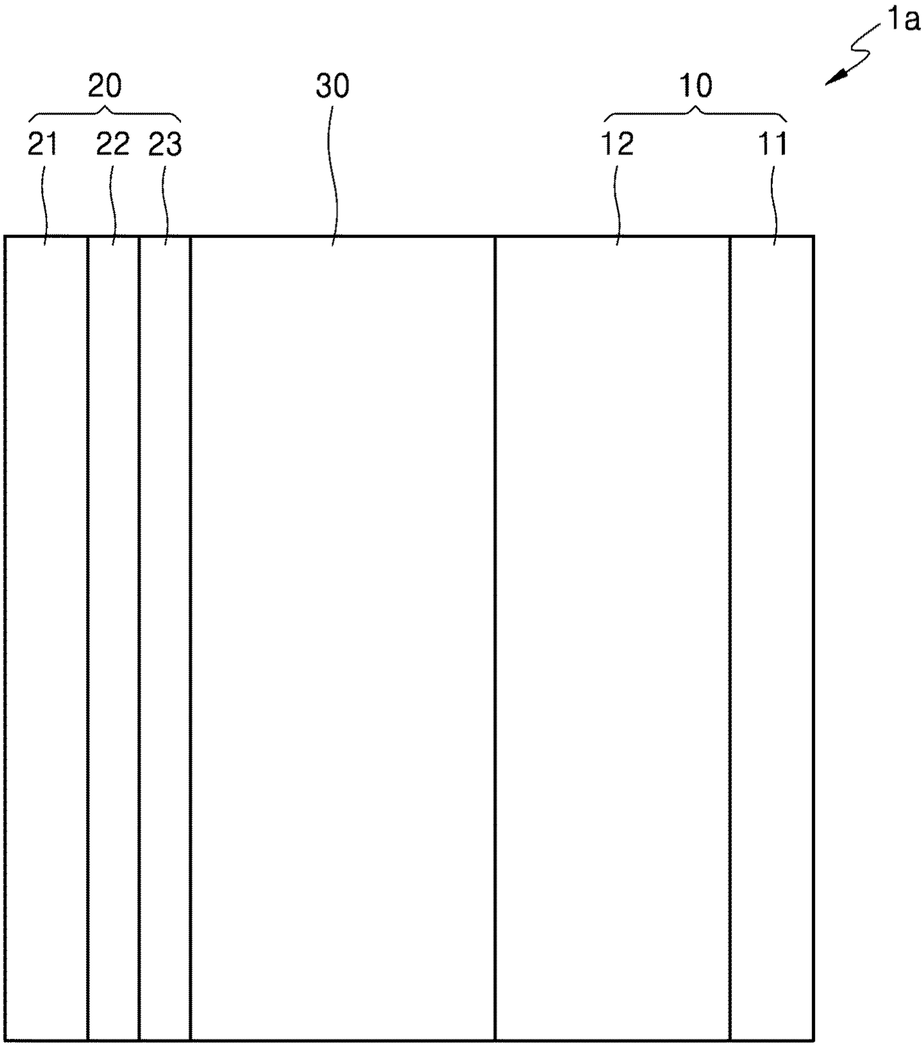

FIG. 8A

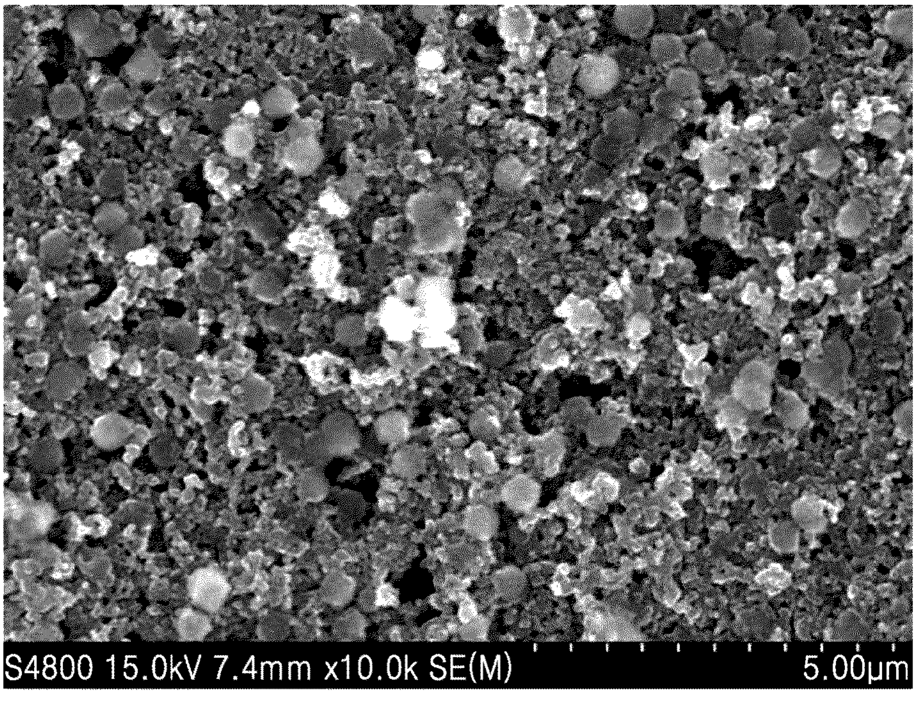

FIG. 8B

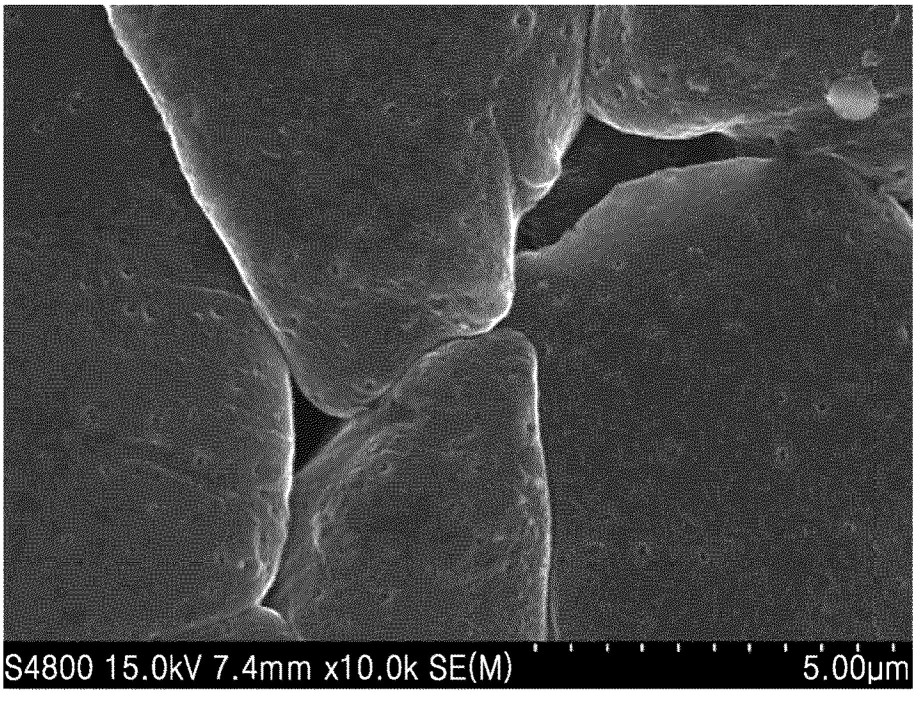

FIG. 8C

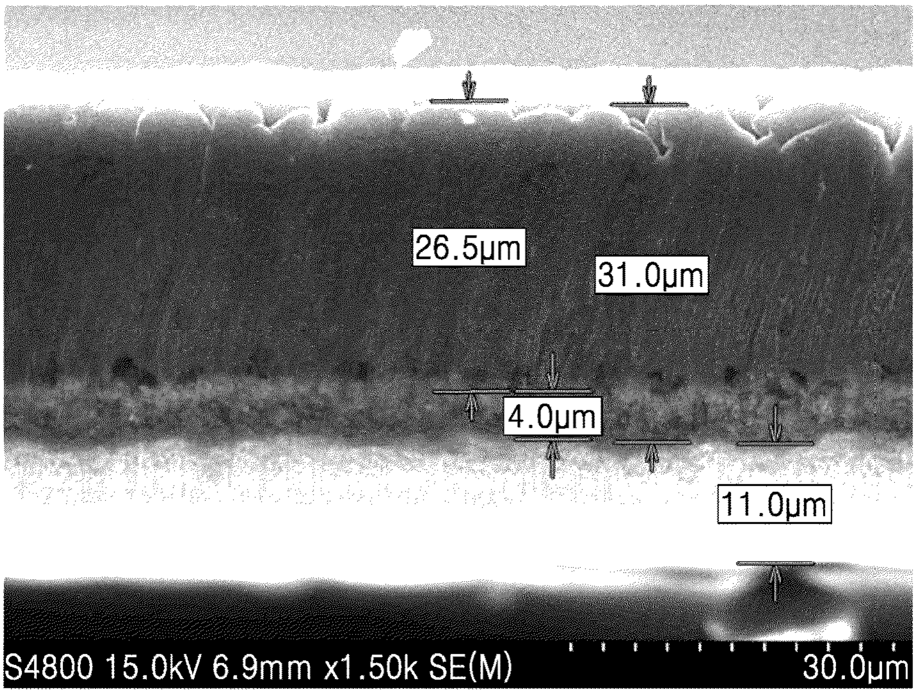

FIG. 9A

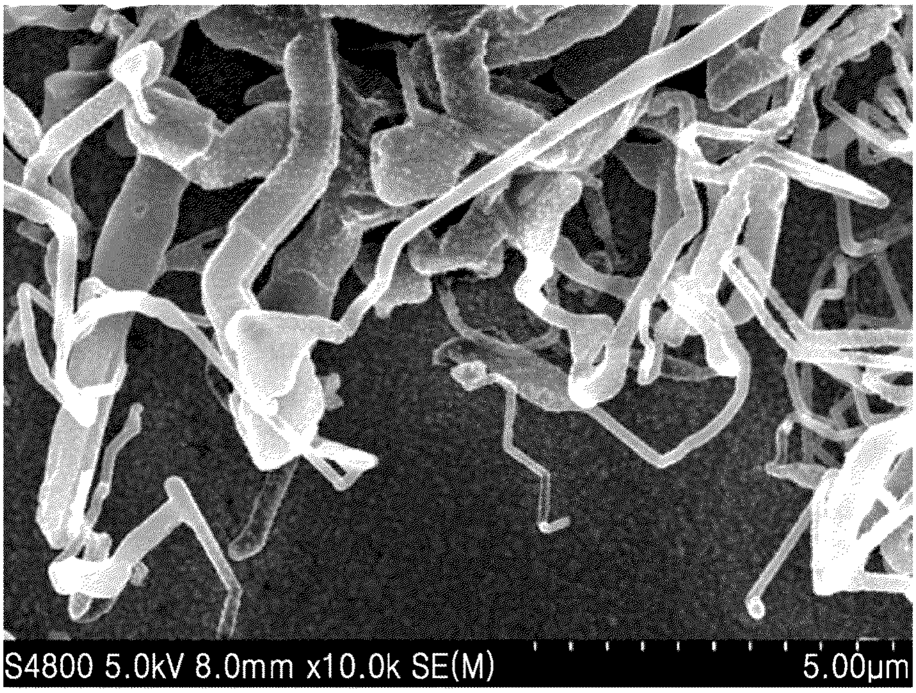

FIG. 9B

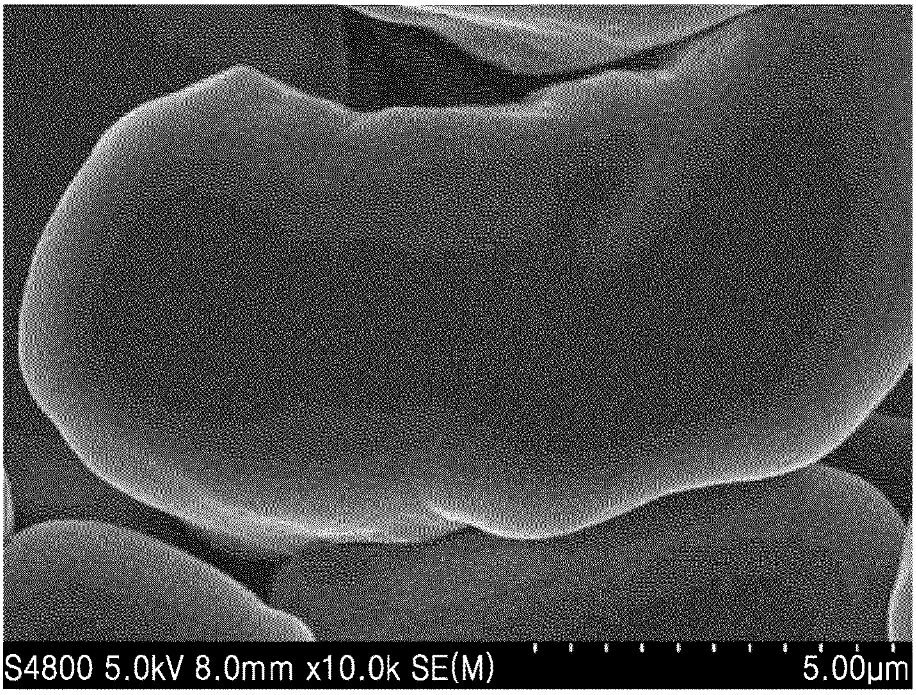

FIG. 9C

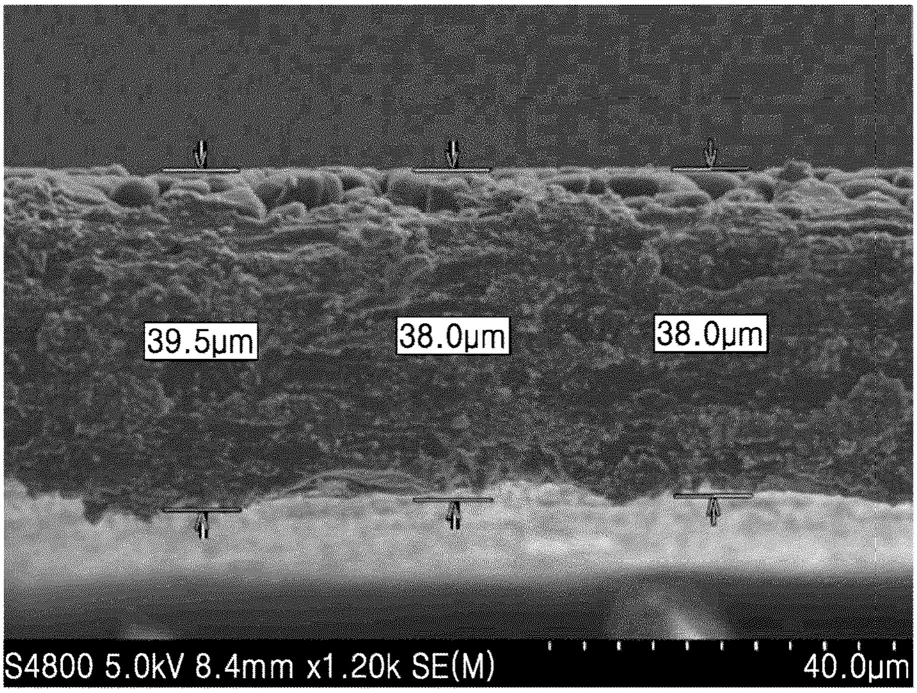

## INTERNATIONAL SEARCH REPORT

International application No.
**PCT/KR2024/003735**

### A. CLASSIFICATION OF SUBJECT MATTER

**H01M 4/62**(2006.01)i; **H01M 4/134**(2010.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/0525(2010.01); H01M 10/42(2006.01); H01M 2/26(2006.01); H01M 4/02(2006.01); H01M 4/13(2010.01); H01M 4/587(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메타크릴산(methacrylic acid), 아크릴로나이트릴(acrylonitrile), 폴리알킬렌글리콜(polyalkylene glycol), 바인더(binder), 음극(negative electrode), 리튬전지(lithium battery)

### C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2015-0071792 A (HANWHA CHEMICAL CORPORATION) 29 June 2015 (2015-06-29)<br>See claims 1, 3, 4, 8, 11, 12, 14, 15 and 18; and paragraphs [0001], [0030] and [0093]. | 1-3,7-12<br>4-6,13-20 |
| Y | KR 10-2018-0007335 A (LG CHEM, LTD.) 22 January 2018 (2018-01-22)<br>See claims 1 and 4; and paragraph [0030]. | 4-6 |
| Y | KR 10-2022-0035863 A (LG ENERGY SOLUTION, LTD.) 22 March 2022 (2022-03-22)<br>See claims 1, 3 and 4; paragraphs [0021], [0038], [0054] and [0095]; and table 2. | 13-20 |
| X | KR 10-2022-0063043 A (LG CHEM, LTD.) 17 May 2022 (2022-05-17)<br>See paragraphs [0041]-[0089] and [0112]-[0120]; and claims 1-5 and 7-13. | 1-3,7-12 |
| A | KR 10-2112227 B1 (U&S ENERGY, INC.) 18 May 2020 (2020-05-18)<br>See entire document. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2024** | **04 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/003735**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0052707 A (SAMSUNG ELECTRONICS CO., LTD. et al.) 15 May 2020 (2020-05-15) See entire document. | 1-20 |

Form PCT/ISA/210 (second sheet) (July 2022)

**INTERNATIONAL SEARCH REPORT**
**Information on patent family members**

International application No.
**PCT/KR2024/003735**

| Patent document cited in search report | Publication date (day/month/year) | Patent family member(s) | Publication date (day/month/year) |
|---|---|---|---|
| KR 10-2015-0071792 A | 29 June 2015 | WO 2015-093765 A1 | 25 June 2015 |
| KR 10-2018-0007335 A | 22 January 2018 | CN 108140842 A | 08 June 2018 |
| | | CN 108140842 B | 12 March 2021 |
| | | KR 10-2038070 B1 | 30 October 2019 |
| | | US 2018-0294512 A1 | 11 October 2018 |
| | | WO 2018-012881 A1 | 18 January 2018 |
| KR 10-2022-0035863 A | 22 March 2022 | CN 116018694 A | 25 April 2023 |
| | | EP 4199158 A1 | 21 June 2023 |
| | | JP 2023-537635 A | 04 September 2023 |
| | | US 2023-0268517 A1 | 24 August 2023 |
| | | WO 2022-055335 A1 | 17 March 2022 |
| KR 10-2022-0063043 A | 17 May 2022 | None | |
| KR 10-2112227 B1 | 18 May 2020 | CN 112400244 A | 23 February 2021 |
| | | CN 112400244 B | 16 January 2024 |
| | | EP 3832764 A1 | 09 June 2021 |
| | | JP 2021-532538 A | 25 November 2021 |
| | | JP 7288707 B2 | 08 June 2023 |
| | | KR 10-2020-0012591 A | 05 February 2020 |
| | | US 2021-0273231 A1 | 02 September 2021 |
| | | WO 2020-022699 A1 | 30 January 2020 |
| KR 10-2020-0052707 A | 15 May 2020 | CN 111162276 A | 15 May 2020 |
| | | US 11349114 B2 | 31 May 2022 |
| | | US 2020-0144599 A1 | 07 May 2020 |

Form PCT/ISA/210 (patent family annex) (July 2022)